# EUROPEAN PATENT SPECIFICATION

(11) **EP 3 554 123 B1**
(45) Date of publication and mention of the grant of the patent: **09.03.2022**
(21) Application number: 18736748.7
(22) Date of filing: 04.01.2018
(51) Int. Cl.: H04W 36/00, H04W 72/04, H04W 74/00, H04W 74/08

(54) **GRANT-FREE RESOURCE ALLOCATION METHOD, USER EQUIPMENT AND NETWORK DEVICE**
VERFAHREN ZUR BERECHTIGUNGSFREIEN RESSOURCENZUWEISUNG, BENUTZERGERÄT UND NETZWERKVORRICHTUNG
PROCÉDÉ D'ATTRIBUTION DE RESSOURCES SANS OCTROI, ÉQUIPEMENT D'UTILISATEUR ET DISPOSITIF DE RÉSEAU

(30) Priority: 06.01.2017 CN 201710011312
(43) Date of publication of application: 16.10.2019
(73) Proprietor: Huawei Technologies Co., Ltd., Longgang District Shenzhen, Guangdong 518129 (CN)
(72) Inventor: LIU, Yalin, Shenzhen Guangdong 518129 (CN); LI, Sainan, Shenzhen Guangdong 518129 (CN); DU, Yinggang, Shenzhen Guangdong 518129 (CN)
(74) Representative: Pfenning, Meinig & Partner mbB
(86) International application number: PCT/CN2018/071366
(87) International publication number: WO 2018/127092

(56) References cited:
- WO-A1-2012/164531
- CN-A- 101 272 602
- CN-A- 102 685 900
- CN-A- 104 125 598
- NTT DOCOMO INC: "RAN2 aspects on random access procedure for NR", 3GPP DRAFT; R2-168035, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20161114 - 20161118 13 November 2016 (2016-11-13), XP051177734, Retrieved from the Internet: URL:http://www.3gpp.org/ftp/Meetings_3GPP_ SYNC/RAN2/Docs/ [retrieved on 2016-11-13]
- NOKIA ALCATEL-LUCENT SHANGHAI BELL: "Data transmission in INACTIVE", 3GPP DRAFT; R2-167706 DATA TRANSMISSION IN RRC_INACTIVE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20161114 - 20161118 13 November 2016 (2016-11-13), XP051177524, Retrieved from the Internet: URL:http://www.3gpp.org/ftp/Meetings_3GPP_ SYNC/RAN2/Docs/ [retrieved on 2016-11-13]
- HUAWEI ET AL.: 'UL Data Transmission in RRC_INACTIVE' 3GPP TSG-RAN WG2 #96 R2-168544 18 November 2016, XP051178119

## Description

### TECHNICAL FIELD

This application relates to the communications field, and in particular, to a grant-free resource allocation method, user equipment, and a network device.

### BACKGROUND

With development of a communications system, more MTC (Machine Type Communication, machine type communication) services emerge. Generally, packets of the MTC services are relatively small, and it is required that a transmission latency should also be relatively short. When there are plenty of MTC services, a scheduling request mechanism in which user equipment (User Equipment, UE for short) sends a scheduling request or a buffer status report to a network device, on one hand, causes a lot of signaling overheads, and on the other hand, causes a transmission latency. In addition, because the UE consumes additional energy in a signaling scheduling process, this also poses a great challenge to energy consumption of the user equipment.

To resolve the foregoing problem, an uplink grant-free (Grant-Free) transmission solution is provided in the industry. "Grant free" means that in a PLMN (Public Land Mobile Network, public land mobile network), UE does not need to request, by using a scheduling request, a network device to allocate a transmission resource for data transmission. A time-frequency resource that may be used for grant-free transmission in a cell is basically configured fixedly. A BS (Base Station, base station) may broadcast an available grant-free transmission resource of a cell. The grant-free transmission resource may be divided into different contention transmission units CTUs (Contention Transmission Unit, contention transmission unit). For UE supporting grant-free transmission in the cell, a mapping between the UE and one or more CTUs is configured for grant-free transmission.

When the UE moves from a current cell to a neighboring cell, a network side device needs to reconfigure a grant-free resource mapping for the UE, and this needs to consume corresponding signaling resource. To be specific, regardless of whether a grant-free resource configuration of the neighboring cell is the same as that of the source cell, the network device needs to reconfigure a grant-free resource for the UE. However, if the grant-free resource configuration of the neighboring cell is the same as that of the source cell, the grant-free resource reconfiguration performed by the network device causes a signaling resource waste and latency increase. In this application, that the UE moves from the current cell to the neighboring cell means that quality of a signal transmitted on an air interface between the UE and the neighboring cell is already better than quality of a signal transmitted on an air interface between the UE and the current cell.

NTT DOCOMO INC in "RAN2 aspects on random access procedure for NR", vol. RAN WG2, no. Reno, USA; 20161114 - 20161118, (20161113), 3GPP DRAFT; R2-168035, describes a random access procedure in 5G NR in which a RAN paging area corresponds to one Tracking Area so that the RAN does not have to broadcast another paging area code when a UE moves across the RAN paging area.

NOKIA ALCATEL-LUCENT SHANGHAI BELL in "Data transmission in INACTIVE", vol. RAN WG2, no. Reno, USA; 20161114 - 20161118, (20161113), 3GPP DRAFT; R2-167706, describes grant-free data transmission in the context of a random access procedure in 5G NR.

### SUMMARY

According to the present application, the above objects are solved by the claimed matter according to the independent claims. Embodiments of this application provide grant-free resource allocation methods, a communication device, a computer program, and a computer-readable storage medium, so that when user equipment moves from a first cell to a second cell, if an ID of a second grant-free resource area to which the second cell belongs is the same as a preobtained ID of a first grant-free resource area to which the first cell belongs, the user equipment performs grant-free communication based on a first UE ID corresponding to the first cell. To be specific, the user equipment does not need to initiate a resource reconfiguration request to a second network device for resource reconfiguration. Therefore, signaling overheads are reduced, and a communication latency is reduced.

### BRIEF DESCRIPTION OF DRAWINGS

To describe the technical solutions in the embodiments of this application more clearly, the following briefly describes the accompanying drawings required for describing the embodiments. The accompanying drawings in the following description show merely some embodiments of this application, and other drawings may still be derived from these accompanying drawings.
FIG. 1 is a schematic diagram of a grant-free resource configuration of a cell according to an embodiment of this application;
FIG. 2 is a schematic diagram of a CTU mapping of a grant-free resource of a cell according to an embodiment of this application;
FIG. 3A and FIG. 3B form a schematic diagram in which configuration information of grant-free resources of cells in a grant-free resource area is the same according to an embodiment of this application;
FIG. 4 is a schematic diagram of an embodiment of a grant-free resource allocation method according to an embodiment of this application;
FIG. 5 is a schematic flowchart for reconfiguring a grant-free resource according to an embodiment of this application;
FIG. 6 is another schematic flowchart for reconfiguring a grant-free resource according to an embodiment of this application;
FIG. 7 is another schematic flowchart for reconfiguring a grant-free resource according to an embodiment of this application;
FIG. 8 is a schematic diagram of another embodiment of a grant-free resource allocation method according to an embodiment of this application;
FIG. 9 is a schematic diagram of another embodiment of a grant-free resource allocation method according to an embodiment of this application;
FIG. 10 is a schematic diagram of another embodiment of a grant-free resource allocation method according to an embodiment of this application;
FIG. 11 is a schematic diagram of another embodiment of a grant-free resource allocation method according to an embodiment of this application;
FIG. 12(a) is a schematic diagram of an embodiment of user equipment according to an embodiment of this application;
FIG. 12(b) is a schematic diagram of another embodiment of user equipment according to an embodiment of this application;
FIG. 12(c) is a schematic diagram of another embodiment of user equipment according to an embodiment of this application;
FIG. 13(a) is a schematic diagram of another embodiment of user equipment according to an embodiment of this application;
FIG. 13(b) is a schematic diagram of another embodiment of user equipment according to an embodiment of this application;
FIG. 14(a) is a schematic diagram of an embodiment of a network device according to an embodiment of this application;
FIG. 14(b) is a schematic diagram of another embodiment of a network device according to an embodiment of this application;
FIG. 14(c) is a schematic diagram of another embodiment of a network device according to an embodiment of this application;
FIG. 15(a) is a schematic diagram of another embodiment of a network device according to an embodiment of this application;
FIG. 15(b) is a schematic diagram of another embodiment of a network device according to an embodiment of this application;
FIG. 15(c) is a schematic diagram of another embodiment of a network device according to an embodiment of this application;
FIG. 15(d) is a schematic diagram of another embodiment of a network device according to an embodiment of this application;
FIG. 16 is a schematic diagram of another embodiment of user equipment according to an embodiment of this application; and
FIG. 17 is a schematic diagram of another embodiment of a network device according to an embodiment of this application.

### DESCRIPTION OF EMBODIMENTS

Embodiments of this application provide grant-free (Grant-free) resource allocation methods, a communication device, a computer program, and a computer-readable storage medium, so that when user equipment moves from a first cell to a second cell, if an identity (identity, ID or id for short) of a second grant-free resource area to which the second cell belongs is the same as a preobtained ID of a first grant-free resource area to which the first cell belongs, the user equipment performs grant-free communication based on a first UE ID corresponding to the first cell. To be specific, the user equipment does not need to initiate a resource reconfiguration request to a second network device for resource reconfiguration. Therefore, signaling overheads are reduced, and a communication latency is reduced. It should be understood that, herein "based on a first UE ID corresponding to the first cell" is "based on the first UE ID used by the UE in the first cell". This is also applicable hereinafter and is not described again.

To make persons skilled in the art understand the technical solutions in this application better, the following clearly describes the technical solutions in the embodiments of this application with reference to the accompanying drawings in the embodiments of this application.

A network device used in this application may be a base station, or may be another network device having a function of a base station, or in particular, may be a terminal having a function of a base station in device-to-device (English: Device-to-Device, D2D for short) communication. The base station is an apparatus deployed in a radio access network and configured to provide a wireless communication function for a terminal. The base station may include a macro base station, a micro base station, a relay station, an access point, and the like in various forms. The base station may be applied to systems using different radio access technologies, for example, in an LTE system, or more possible communications systems such as a 5G communications system. User equipment (English: User Equipment, UE for short) may include various handheld devices, in-vehicle devices, wearable devices, and computing devices having wireless communication functions, or other processing devices connected to wireless modems, and terminals, mobile stations (English: Mobile Station, MS for short), and the like in various forms.

In an existing LTE (Long Term Evolution, long term evolution) system, when UE (User Equipment, user equipment) needs to transmit uplink data, transmission is implemented by using an uplink scheduling request (Scheduling Request, SR) or a BSR (Buffer Status Report, buffer status report). The UE sends a scheduling request or a buffer status report to a network device, notifying the network device that the UE requires uplink resources for data transmission. After receiving the scheduling request or the BSR of the UE, the network device schedules resources for the UE, and the UE performs data transmission on the scheduled resources. There is a latency of at least 8 ms from requesting the resources by the UE to uplink data transmission. In addition, in the process, the UE needs to send a request, the network device performs corresponding resource scheduling based on the request of the user equipment by using signaling, and this needs to consume signaling resources.

A future communications system such as 5G supports plenty of MTC services. Generally, packets of the MTC services are relatively small, and it is required that a transmission latency should also be relatively short. If an uplink scheduling request mechanism continues to be used, a lot of signaling overheads are caused, and an uplink transmission latency is relatively long. This problem can be properly resolved by uplink grant-free transmission. Based on different features of data to be transmitted, such as a transmission latency requirement or a reliability requirement, A grant-free user may perform data transmission on a specified time-frequency resource based on different features of data to be transmitted, for example, perform data transmission on a specified time-frequency resource based on a transmission latency requirement or a reliability requirement, and may use different code resources, pilot references, modulation and coding schemes, feedback types, diversity modes, and the like, to reduce network signaling overheads and/or reduce a transmission latency, to reduce network signaling overheads and/or reduce a transmission latency. The network device divides radio resources into various CTUs (Contention Transmission Unit, contention transmission unit) of different sizes, and UE in a cell is mapped to one or more CTUs, or UE may randomly select any CTU in an entire cell for use.

Specifically, each CTU is allocated a group of codes, where the allocated code may be a CDMA (Code Division Multiple Access, code division multiple access) code, or may be an SCMA (Sparse Code Multiple Access, sparse code multiple access) code or an LDS (Low Density Signature, low density signature) or a signature (signature), or the like. Each CTU may be allocated a plurality of different pilot sets. The user equipment UE may select a code and/or a pilot in a pilot group for uplink transmission. For different cells, resource configuration information of grant-free CTUs may be the same or may be different. When the grant-free user moves from one cell to another cell, mapped grant-free transmission resources usually need to be reconfigured, but a reconfiguration process causes signaling overheads.

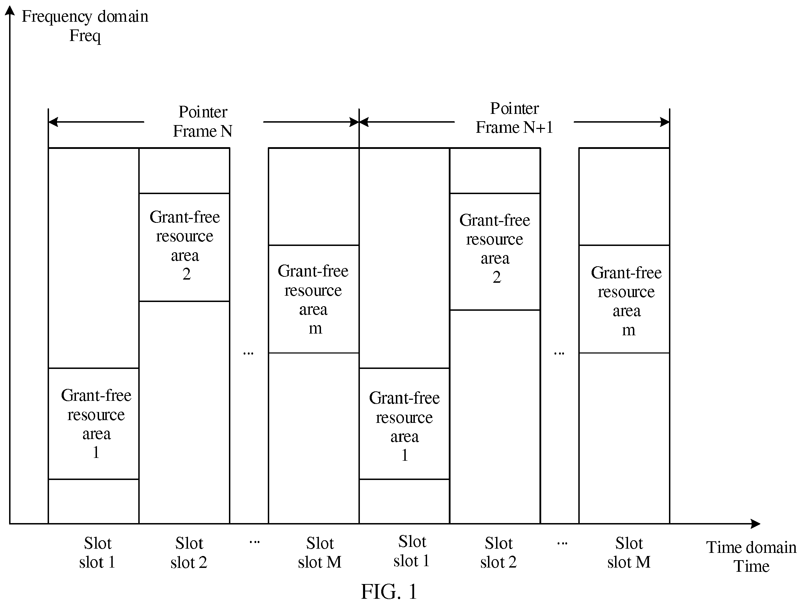

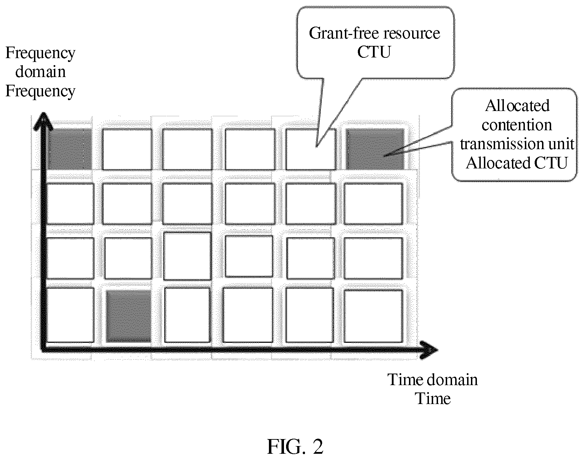

FIG. 1 is a schematic diagram of a grant-free resource configuration of a cell. UE in the cell may be allocated one or more CTUs. FIG. 2 is a schematic diagram of a CTU mapping of a resource in a grant-free area in FIG. 1. The UE may use a plurality of CTUs in a background color in the figure to perform grant-free transmission. When the UE moves from the cell to a neighboring cell, the network device needs to reconfigure a grant-free resource for the UE, and this needs to consume corresponding signaling.

Three states of the UE in this application are respectively: 1. an RRC-idle (English full name of RRC: Radio Resource Control) state, which may be considered to be consistent with an idle state of UE in an LTE system; 2. an RRC-connected state, which may be considered to be consistent with a connected state of the UE in an LTE system; and 3. an RRC-inactive state, which is a state that does not exist in an LTE system. Features when the UE is in the inactive state may include but are not limited to the following: The UE performs a cell reselection; a connection (including a control plane and a user plane) is established between a core network (CN, Core Network) and an access network RAN (radio access network) for the UE; notification of the UE is triggered by the RAN; an access network paging area is managed by the RAN; the RAN knows which UE belongs to which RAN-based notification area; and the UE may perform grant-free uplink transmission in the inactive state.

When the UE is in the inactive or connected state, the UE may perform grant-free uplink transmission, and the network needs to configure a UE ID for the UE. When the UE is in the idle state, the UE may also perform grant-free uplink transmission, but because the network does not allocate an ID to a UE in the idle state, a permanent UE ID may be used to help the network identify the UE. This application mainly describes a process of reconfiguring a grant-free resource when the UE in the inactive or connected state moves between cells, and the idle state is not a focus of this application, but a method in this application may also be applied to grant-free transmission in the idle state.

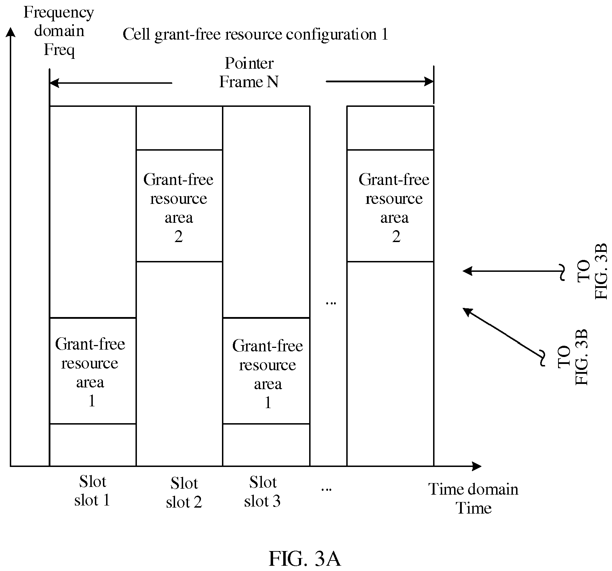

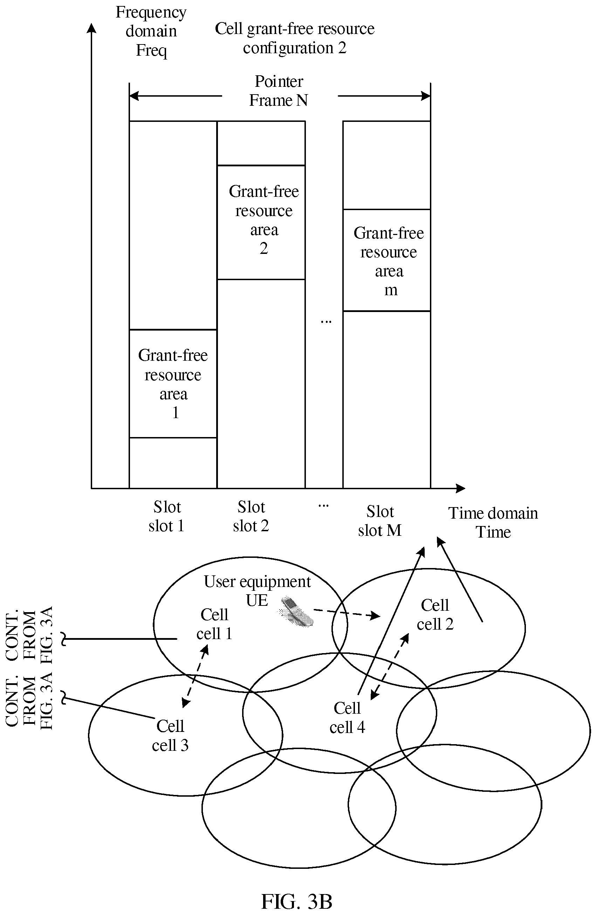

The embodiments of this application may be applied to a next-generation radio access network system or a next-generation wireless local area network system, or the like. Mainly, an area is defined for cells in the network. Neighboring cells having a same grant-free resource configuration may be defined as one area. When moving in the area, the UE in the inactive or connected state may keep its UE ID unchanged. For example, as shown in FIG. 3A and FIG. 3B, a cell 1 and a cell 3 belong to a same area having a same grant-free resource configuration, that is, a grant-free resource configuration 1, and IDs of UEs that camp on the cell 1 and the cell 3 and the grant-free resource configuration are shared between the cell 1 and the cell 3; a cell 2 and a cell 4 belong to a same area having a same grant-free resource configuration, that is, a grant-free resource configuration 2, and IDs of UEs that camp on the cell 2 and the cell 4 and the grant-free resource configuration are shared between the cell 2 and the cell 4. When UE moves between the cell 1 and the cell 3, or moves between the cell 2 and the cell 4, there is no need to reconfigure a grant-free resource. Alternatively, when UE supporting grant-free transmission moves from a cell to a neighboring cell, the UE performs determining based on information in a cell list cell list, where content of the cell list is a cell ID of each cell. If the cell is in the cell list, it indicates that a grant-free resource configuration of the cell is the same as that of the source cell, and there is no need to reconfigure a grant-free resource, where grant-free resource configurations of cells in the cell list are the same. Therefore, signaling overheads are reduced, and a communication latency is reduced.

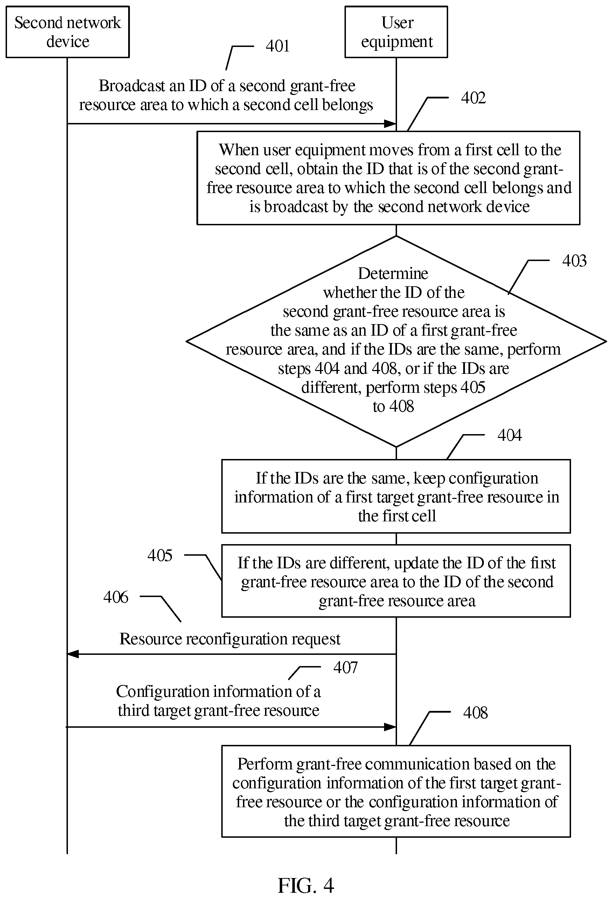

The following further describes the technical solution of this application by using an embodiment. FIG. 4 is a schematic diagram of an embodiment of a grant-free resource allocation method according to an embodiment of this application. The method is mainly applied to a grant-free communications system. The grant-free communications system includes at least two grant-free resource areas, each grant-free resource area includes at least one cell, each cell in the grant-free resource area shares user equipment information, and configuration information of a grant-free resource of each cell in the grant-free resource area is the same. The method includes the following steps.

401. A second network device broadcasts an ID of a second grant-free resource area to which a second cell belongs.

In this embodiment of this application, the network device may define an area for cells in a network, where the area may be referred to as a grant-free resource area, and each grant-free resource area includes at least one cell. Cells in a same grant-free resource area may be neighboring or may not be neighboring. Configuration information of a grant-free resource in each cell in a grant-free resource area is the same. In addition, each grant-free resource area further needs to be numbered. As an identity of the grant-free resource area (Grant-free resource area id), for example, the number may be 1, 2, 3, ..., N (N is an integer), or a, b, c, .... The network device broadcasts an ID of a grant-free resource area to which each cell belongs. Numbers of grant-free resource areas that fall beyond a range may be same, as long as a grant-free resource area ID of each cell in a grant-free resource area is the same and grant-free resource area IDs of neighboring grant-free resource areas (or areas whose distances are shorter than a preset range) are different.

A grant-free resource in a cell is divided into CTUs of different sizes. One or more CTUs may be allocated to each user equipment in the cell. The user equipment supports grant-free transmission, and may be in an inactive or connected state, as shown in FIG. 2. When the UE initially accesses the network, the network device sends, to the user equipment, configuration information of a CTU allocated to the user equipment. A corresponding cell when the UE initially accesses the network may be understood as a first cell. In this case, the user equipment pre-obtains configuration information of a first target grant-free resource in the first cell and allocated by a first network device. In a same grant-free resource area, each cell shares information about UE that camps on the cell and mapping information of a grant-free resource(a sharing mode may be sending backhaul signaling between network devices, or may be performing a configuration by using a central node). Configuration information of a grant-free resource of each cell in the same grant-free resource area is the same.

The user equipment information shared by each cell in the same grant-free resource area may be mapping information of the grant-free resource of the user equipment and/or an identity ID of the user equipment, and the identity ID may be specifically any one of the following: a radio network temporary identifier (RNTI, Radio Network Temporary Identifier), an international mobile subscriber identity (IMSI, International Mobile Subscriber Identity), a globally unique temporary UE identity GUTI (Globally Unique Temporary UE Identity), a temporary mobile subscriber identity (TMSI, Temporary Mobile Subscriber Identity), a slice number, and an Internet Protocol (IP, Internet Protocol) address.

The second network device broadcasts the ID of the second grant-free resource area to which the second cell belongs. It should be understood that, the second network device herein corresponds to the second cell only for convenience, that is, when the user equipment is in the first cell, a corresponding device is the first network device. The network device herein may be a base station or a core network or another device. In the following descriptions, the second network device is a target base station, and the first network device is a source base station.

It should be noted that, in this embodiment of this application, the grant-free resource of the UE needs to be separately configured by the network device is described.

402. When user equipment moves from a first cell to the second cell, the user equipment obtains the ID that is of the second grant-free resource area to which the second cell belongs and is broadcast by the second network device.

In this embodiment of this application, when the user equipment moves from the first cell to the second cell, the user equipment obtains the ID that is of the second grant-free resource area to which the second cell belongs and is broadcast by the second network device. To be specific, the user equipment receives information broadcast by the target base station, and demodulates the ID of the grant-free resource area to which the second cell belongs.

Specifically further, when the user equipment is in the inactive state or the connected state, and the user equipment moves from the first cell to the second cell, the user equipment may obtain the ID that is of the second grant-free resource area to which the second cell belongs and is broadcast by the second network device.

403. The user equipment determines whether the ID of the second grant-free resource area is the same as a preobtained ID of a first grant-free resource area to which the first cell belongs, and if the IDs are the same, the user equipment performs steps 404 and 408, or if the IDs are different, the user equipment performs steps 405 to 408.

404. If the ID of the second grant-free resource area is the same as the preobtained ID of the first grant-free resource area to which the first cell belongs, the user equipment keeps configuration information of a first target grant-free resource in the first cell.

In this embodiment of this application, for example, if the ID of the second grant-free resource area is an area 2, and the ID that is of the first grant-free resource area to which the first cell belongs and is preobtained by the user equipment is the area 2, the ID of the second grant-free resource area herein is the same as the ID of the first grant-free resource area, and it indicates that the first cell and the second cell belong to a same grant-free resource area, and therefore the user equipment may keep the configuration information of the first target grant-free resource. By default, configuration information of grant-free resources mapped in the first cell and the second cell for the user equipment is the same, and the configuration information of the first target grant-free resource is information for performing communication by using the grant-free resource when the user equipment is in the first cell. When the user equipment keeps the configuration information of the first target grant-free resource, the user equipment may further keep a UE ID allocated to the user equipment when the user equipment is in the first cell.

405. If the ID of the second grant-free resource area is different from the preobtained ID of the first grant-free resource area to which the first cell belongs, the user equipment updates the ID of the first grant-free resource area to the ID of the second grant-free resource area.

In this embodiment of this application, for example, if the ID of the second grant-free resource area is the area 2, and the ID that is of the first grant-free resource area to which the first cell belongs and is preobtained by the user equipment is an area 1, the ID of the first grant-free resource area is different from the ID of the second grant-free resource area, and it indicates that the first cell and the second cell do not belong to a same grant-free resource area, and therefore the user equipment may update the ID (the area 1) of the first grant-free resource area to the ID (the area 2) of the second grant-free resource area.

406. The user equipment sends a resource reconfiguration request to the second network device.

In this embodiment of this application, step 406 follows step 405, and may include the following step a and step b:
a. The user equipment sends the resource reconfiguration request to the second network device.
b. The second network device receives the resource reconfiguration request sent by the user equipment.

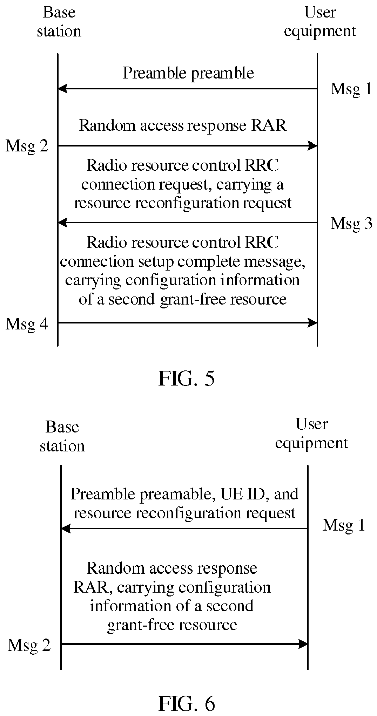

When the user equipment is in the inactive state, the user equipment may initiate a RACH (random access channel, random access channel) process, and add a grant-free resource reconfiguration request to the process. Specifically, the following may be included: As shown in FIG. 5, which is a schematic flowchart for reconfiguring a grant-free resource during conventional random access, the user equipment sends a resource reconfiguration request to the second network device, where the resource reconfiguration request is carried in a radio resource control (RRC, Radio Resource Control) connection request; or as shown in FIG. 6, which is another schematic flowchart for reconfiguring a grant-free resource during random access, the user equipment sends a resource reconfiguration request, a preamble, and a UE ID to the second network device.

When the user equipment is in the connected state, a case of reconfiguring configuration information of a grant-free resource for the UE may be: after the UE accesses the second cell, the UE listens to a grant-free resource ID broadcast by the cell, to determine whether a reconfiguration is required; and if the reconfiguration is required, the UE sends a grant-free resource configuration request to the second network device, where the request may be sent by using an uplink control channel, and then the second network device reconfigures a grant-free resource for the UE. Specifically, the resource reconfiguration may be completed by using configuration information of the grant-free resource that is carried in RRC signaling, scheduled broadcast signaling, or downlink control signaling.

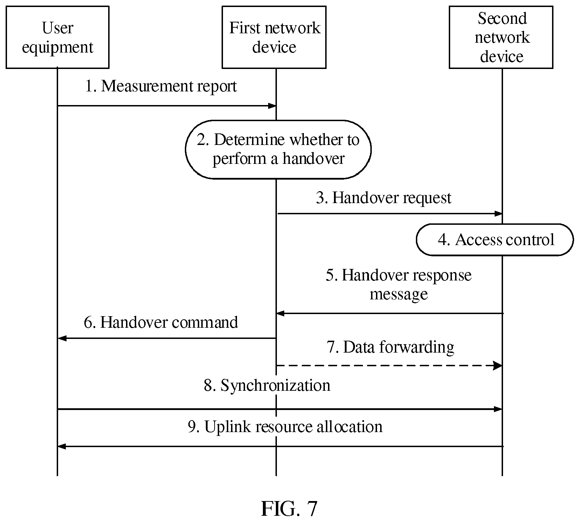

Another case of reconfiguring a resource for the UE may be: when the user equipment is in the connected state and is handed over between cells, a process of reconfiguring a grant-free resource in a handover process is shown in FIG. 7:
1. The UE sends a measurement report to the first network device.
2. The first network device determines whether to hand over the UE to another network device.
3. The first network device initiates a handover request to the second network device. Because in this embodiment, configuration information of a grant-free resource of each cell in a same grant-free resource area is the same, the handover request carries an ID of a grant-free resource of the first cell or configuration information of a grant-free resource of the first cell.
4. The second network device performs access control and a radio resource configuration for the UE; and if an ID of a grant-free resource of the second cell or configuration information of a grant-free resource of the cell is correspondingly consistent with the received ID of the grant-free resource of the first cell or configuration information of the grant-free resource of the cell, the second cell does not reconfigure a grant-free resource; otherwise, the second cell reconfigures a grant-free resource for the UE.
5. The second network device returns a handover response message to the first network device, where the message includes an admission result and radio resource configuration information; if the second network device determines to reconfigure a grant-free resource for the UE in step 4, the message carries the configuration information of the grant-free resource of the second cell; if the grant-free resource of the UE needs to be separately configured, a grant-free resource configuration of the second cell is mapping information of the grant-free resource of the UE in the second cell; or if the grant-free resource of the UE does not need to be separately configured, a grant-free resource configuration of the second cell is the configuration information of the grant-free resource of the second cell.
6. The second network device forwards the information (including the configuration information of the grant-free resource of the second cell) to the UE, and sends a handover command to the UE.
7, 8, and 9. The UE accesses the second network device based on the configuration information.

407. The second network device sends configuration information of a third target grant-free resource to the user equipment.

In this embodiment of this application, step 407 follows step 406, and may include the following step c and step d:
c. The second network device sends the configuration information of the third target grant-free resource to the user equipment, where the configuration information of the third target grant-free resource is used by the user equipment to perform grant-free communication.
d. The user equipment obtains the configuration information that is of the third target grant-free resource and is sent by the second network device.

Specifically, in an actual application, the following may be further included: The network device performs resource allocation based on the resource reconfiguration request, and determines the configuration information of the third target grant-free resource.

That the second network device sends the configuration information of the third target grant-free resource to the user equipment based on the resource reconfiguration request may include: as shown in FIG. 5, the second network device adds the configuration information of the third target grant-free resource to a radio resource control RRC connection setup complete message, and sends the RRC connection setup complete message to the user equipment; or as shown in FIG. 6, the second network device adds the configuration information of the third target grant-free resource to a random access response (RAR, Random Access Response), and sends the random access response to the user equipment.

The configuration information of the third target grant-free resource may also be the radio resource configuration information determined in FIG. 7. The configuration information of the third target grant-free resource may be preconfigured by the second network device, and sent to a plurality of user equipments by broadcast, unicast, or multicast, or the configuration information of the third target grant-free resource may be the configuration information of the third target grant-free resource in the second cell and reallocated based on the resource reconfiguration request after the second network device receives the resource reconfiguration request, and then the configuration information of the third target grant-free resource is sent to the user equipment by broadcast, unicast, or multicast.

Further, whether the UE ID needs to be reconfigured is determined by the second network device, that is, the target base station (BS, Base Station), depending on a location of the UE. If the UE ID needs to be reconfigured, the BS may add the UE ID to the resource reconfiguration request message in the random access process. The target BS updates the UE ID in the random access process.

It should be noted that, steps 403 and 405 to 407 are optional. In an actual application, whether to perform the steps is determined based on an actual requirement.

408. The user equipment performs grant-free communication based on the obtained configuration information of the target grant-free resource.

In this embodiment of this application, if step 408 follows step 404, the user equipment may perform grant-free communication based on the configuration information of the first target grant-free resource; or if step 408 follows steps 405 to 407, the user equipment may perform grant-free communication based on the configuration information of the third target grant-free resource. Further, the following method may be used to update the configuration information of the grant-free resource:
(1) After the user equipment completes data transmission, the user equipment starts a timer; and if the timer expires, the user equipment releases configuration information of a current grant-free resource, where the configuration information of the current grant-free resource is the configuration information of the first target grant-free resource or the configuration information of the third target grant-free resource; or if the timer does not expire, and after the user equipment currently performs data transmission with the second network device, the user equipment stops the timer.
(2) After the second network device completes data transmission, the second network device starts a timer; and if the timer expires, the second network device releases configuration information of a current grant-free resource, where the configuration information of the current grant-free resource is the configuration information of the first target grant-free resource or the configuration information of the third target grant-free resource; or if the timer does not expire, and the second network device currently performs data transmission with the UE second network device, the second network device stops the timer.

For example, in an actual application, the network device and the UE in the grant-free resource area may jointly maintain a timer. After the UE completes uplink or downlink data transmission for a time, the timer is started; before the timer expires, if the network device receives uplink data transmitted by the UE, or the network device needs to transmit downlink data to the UE, the timer is stopped; and if the timer expires, the network device releases the maintained UE ID and grant-free resource mapping information of the UE, and the UE also releases the UE ID and grant-free resource mapping information of the UE, and enters an idle state. The timer is separately configured by each UE, and is mainly related to a service type of the UE.

The user equipment and the network device may jointly maintain a timer. Therefore, under control of the timer, utilization of the grant-free resource is improved. After the timer expires, the user equipment releases the configuration information of the current grant-free resource, so that other user equipment can use the configuration information of the grant-free resource.

This embodiment of this application may be applied to the grant-free communications system. The grant-free communications system includes at least two grant-free resource areas, each grant-free resource area includes at least one cell, each cell in the grant-free resource area shares the user equipment information, the configuration information of the grant-free resource of each cell is the same, and the configuration information of the grant-free resource of each cell in the same grant-free resource area is the same. When the user equipment moves from the first cell to the second cell, if the ID of the first grant-free resource area to which the first cell belongs is the same as the ID of the second grant-free resource area to which the second cell belongs, it indicates that the first cell and the second cell are in the same grant-free resource area; and the user equipment keeps the configuration information of the first target grant-free resource in the first cell. To be specific, when the user equipment is in the second cell, the user equipment may perform grant-free communication directly based on the configuration information of the first target grant-free resource configured by the network device for the user equipment in the first cell, and there is no need to initiate a resource reconfiguration request to the second network device to configure configuration information of a grant-free resource for the user equipment. Therefore, signaling overheads are reduced, and a communication latency is reduced.

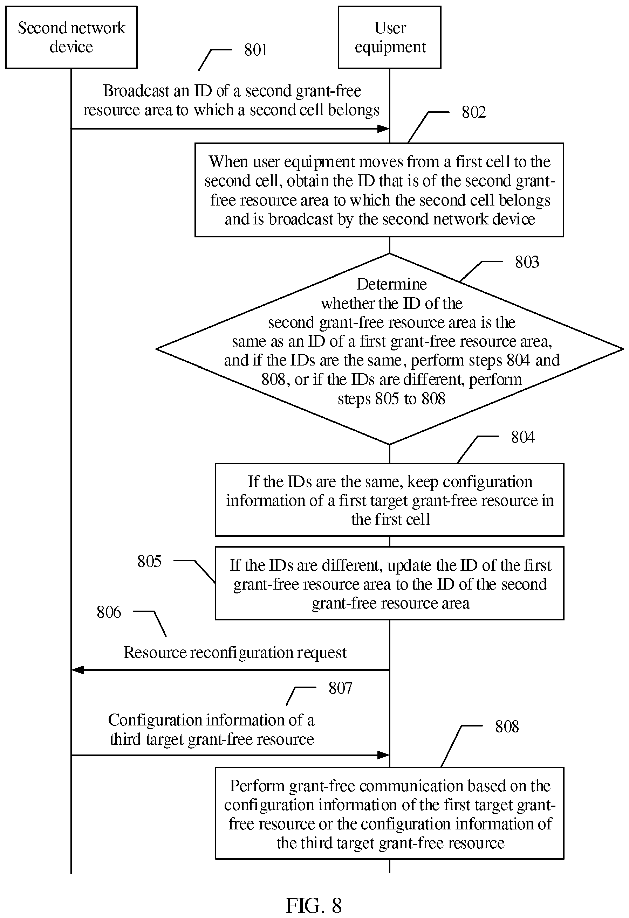

FIG. 8 is a schematic diagram of another embodiment of a grant-free resource allocation method according to an embodiment of this application. The method is mainly applied to a grant-free communications system. The grant-free communications system includes at least two grant-free resource areas, each grant-free resource area includes at least one cell, each cell in the grant-free resource area shares user equipment information, configuration information of a grant-free resource of each cell in the grant-free resource area is the same, and UE may select any target resource from grant-free resources in a corresponding cell to perform data transmission. The method includes the following steps.

801. A second network device broadcasts an ID of a second grant-free resource area to which a second cell belongs.

In this embodiment of this application, the network device may define an area for cells in a network, where the area may be referred to as a grant-free resource area, and each grant-free resource area includes at least one cell. Cells in a same grant-free resource area may be neighboring or may not be neighboring. Configuration information of a grant-free resource in each cell in each grant-free resource area is the same. In addition, each grant-free resource area further needs to be numbered. As an identity of the grant-free resource area (Grant-free resource area id), for example, the number may be 1, 2, 3, ..., N (N is an integer), or a, b, c, .... The network device broadcasts an ID of a grant-free resource area to which each cell belongs. Numbers of grant-free resource areas that fall beyond a range may be the same, as long as a grant-free resource area ID of each cell in a grant-free resource area is the same and grant-free resource area IDs of neighboring grant-free resource areas (or areas whose distances are shorter than a preset range) are different.

User equipment information shared by each cell in a same grant-free resource area may be mapping information of a grant-free resource and/or an identity ID of user equipment, and the identity ID may be specifically any one of the following: a radio network temporary identifier (RNTI, Radio Network Temporary Identifier), an international mobile subscriber identity (IMSI, International Mobile Subscriber Identity), a globally unique temporary UE identity GUTI (Globally Unique Temporary UE Identity), a temporary mobile subscriber identity (TMSI, Temporary Mobile Subscriber Identity), a slice number, and an Internet Protocol (IP, Internet Protocol) address.

The second network device broadcasts the ID of the second grant-free resource area to which the second cell belongs, and may further broadcast configuration information of a second target grant-free resource in the second cell; or a mode such as unicast or multicast may be used. The configuration information of the second target grant-free resource may be broadcast together with the ID of the second grant-free resource area, or the configuration information of the second target grant-free resource and the ID of the second grant-free resource area may be broadcast separately.

It should be noted that, in this embodiment of this application, the grant-free resource of the UE does not need to be separately configured by the network device.

802. When user equipment moves from a first cell to the second cell, the user equipment obtains the ID that is of the second grant-free resource area to which the second cell belongs and is broadcast by the second network device.

In this embodiment of this application, when the user equipment moves from the first cell to the second cell, the user equipment obtains the ID that is of the second grant-free resource area to which the second cell belongs and is broadcast by the second network device. To be specific, the user equipment receives information broadcast by a target base station, and demodulates the ID of the grant-free resource area to which the second cell belongs, and may further obtain the configuration information of the second target grant-free resource in the second cell.

Specifically further, when the user equipment is in an inactive state or a connected state, and the user equipment moves from the first cell to the second cell, the user equipment may obtain the ID that is of the second grant-free resource area to which the second cell belongs and is broadcast by the second network device, and may further obtain the configuration information of the second target grant-free resource in the second cell.

803. The user equipment determines whether the ID of the second grant-free resource area is the same as a preobtained ID of a first grant-free resource area to which the first cell belongs, and if the IDs are the same, the user equipment performs steps 804 and 808, or if the IDs are different, the user equipment performs steps 805 to 808.

804. If the ID of the second grant-free resource area is the same as the preobtained ID of the first grant-free resource area to which the first cell belongs, the user equipment keeps configuration information of a first target grant-free resource in the first cell.

805. If the ID of the second grant-free resource area is different from the preobtained ID of the first grant-free resource area to which the first cell belongs, the user equipment updates the ID of the first grant-free resource area to the ID of the second grant-free resource area.

In this embodiment of this application, step 804 and step 805 are the same as step 404 and step 405 shown in FIG. 4. Details are not described again herein.

806. The user equipment sends a resource reconfiguration request to the second network device.

In this embodiment of this application, step 806 follows step 805, and may include the following step a and step b:
a. The user equipment sends the resource reconfiguration request to the second network device.
b. The second network device receives the resource reconfiguration request sent by the user equipment.

When the user equipment is in the inactive state, the user equipment may initiate a RACH (random access channel, random access channel) process, and add a grant-free resource reconfiguration request to the process. Specifically, the following may be included: As shown in FIG. 5, the user equipment sends a resource reconfiguration request or grant-free capability information to the second network device, where the resource reconfiguration request or the grant-free capability information is carried in a radio resource control (RRC, Radio Resource Control) connection request; or as shown in FIG. 6, the user equipment sends a resource reconfiguration request or grant-free capability information, and sends a preamble and a UE ID to the second network device.

When the user equipment is in the connected state, a case of reconfiguring configuration information of a grant-free resource for the UE is similar to the manner described in FIG. 7. Refer to the foregoing descriptions. Details are not described again herein. A difference lies in that, the first target grant-free resource and the second target grant-free resource that are configured by the network device for the UE in the embodiment shown in FIG. 4 are fixedly mapped to CTUs of the cells, but the configuration information of the first target grant-free resource and the configuration information of the second target grant-free resource that are configured by the network device for the UE in the embodiment shown in FIG. 8 include any resource selected from grant-free resources of the cells. Certainly, this does not exclude a possibility that the resource mapped by the network device for the UE in the embodiment shown in FIG. 4 is the same as any resource selected in the embodiment shown in FIG. 8.

807. The second network device sends configuration information of a third target grant-free resource to the user equipment.

In this embodiment of this application, step 807 follows step 806, and may include the following step c and step d:
c. The second network device sends the configuration information of the third target grant-free resource to the user equipment, where the configuration information of the third target grant-free resource is used by the user equipment to perform grant-free communication.
d. The user equipment obtains the configuration information that is of the third target grant-free resource and is sent by the second network device.

Specifically, in an actual application, the following may be further included: The network device performs resource allocation based on the resource reconfiguration request, and determines the configuration information of the third target grant-free resource.

That the second network device sends the configuration information of the third target grant-free resource to the user equipment based on the resource reconfiguration request may include: as shown in FIG. 5, the second network device adds the configuration information of the third target grant-free resource to a radio resource control RRC connection setup complete message, and sends the RRC connection setup complete message to the user equipment; or as shown in FIG. 6, the second network device adds the configuration information of the third target grant-free resource to a random access response (RAR, Random Access Response), and sends the random access response to the user equipment.

The configuration information of the third target grant-free resource may also be the radio resource configuration information determined in FIG. 7. The configuration information of the third target grant-free resource may be preconfigured by the second network device, and sent to a plurality of user equipments by broadcast, unicast, or multicast, or the configuration information of the third target grant-free resource may be the configuration information of the third target grant-free resource in the second cell and reallocated based on the resource reconfiguration request or the grant-free capability information after the second network device receives the resource reconfiguration request or the grant-free capability information, and then the configuration information of the third target grant-free resource is sent to the user equipment by broadcast, unicast, or multicast.

Further, whether the UE ID needs to be reconfigured is determined by the second network device, that is, the target base station (BS, Base Station), depending on a location of the UE. If the UE ID needs to be reconfigured, the BS may add the UE ID to the resource reconfiguration request message or the grant-free capability information in the random access process. The target BS updates the UE ID in the random access process.

It should be noted that, steps 803 and 805 to 807 are optional. In an actual application, whether to perform the steps is determined based on an actual requirement.

808. The user equipment performs grant-free communication based on the obtained configuration information of the target grant-free resource.

In this embodiment of this application, if step 808 follows step 804, the user equipment may perform grant-free communication based on the configuration information of the first target grant-free resource; or if step 808 follows steps 805 to 807, the user equipment may perform grant-free communication based on the configuration information of the third target grant-free resource. Further, the following method may be used to update the configuration information of the grant-free resource:
(1) After the user equipment completes data transmission, the user equipment starts a timer; and if the timer expires, the user equipment releases configuration information of a current grant-free resource, where the configuration information of the current grant-free resource is the configuration information of the first target grant-free resource or the configuration information of the third target grant-free resource; or if the timer does not expire, and after the user equipment currently performs data transmission with the second network device, the user equipment stops the timer.
(2) After the second network device completes data transmission, the second network device starts a timer; and if the timer expires, the second network device releases configuration information of a current grant-free resource, where the configuration information of the current grant-free resource is the configuration information of the first target grant-free resource or the configuration information of the third target grant-free resource; or if the timer does not expire, and the second network device currently performs data transmission with the UE, the second network device stops the timer.

For example, in an actual application, the network device and the UE in the grant-free resource area may jointly maintain a timer. After the UE completes uplink or downlink data transmission for a time, the timer is started; before the timer expires, if the network device receives uplink data transmitted by the UE, or the network device needs to transmit downlink data to the UE, the timer is stopped; and if the timer expires, the network device releases the maintained UE ID, and the UE also releases the UE ID, and enters an idle state.

The user equipment and the network device may jointly maintain a timer. Therefore, under control of the timer, utilization of the grant-free resource is improved. After the timer expires, the user equipment releases the configuration information of the current grant-free resource, so that other user equipment can use the configuration information of the grant-free resource.

This embodiment of this application may be applied to the grant-free communications system. The grant-free communications system includes at least two grant-free resource areas, each grant-free resource area includes at least one cell, each cell in the grant-free resource area shares the user equipment information, and the configuration information of the grant-free resource of each cell in the grant-free resource area is the same. The UE may select any target resource from grant-free resources in a corresponding cell to perform data transmission. When the user equipment moves from the first cell to the second cell, if the ID of the first grant-free resource area to which the first cell belongs is the same as the ID of the second grant-free resource area to which the second cell belongs, it indicates that the first cell and the second cell are in a same grant-free resource area; and the user equipment keeps the configuration information of the first target grant-free resource in the first cell. To be specific, when the user equipment is in the second cell, the user equipment may perform grant-free communication directly based on the configuration information of the first target grant-free resource configured by the network device for the user equipment in the first cell, and there is no need to initiate a resource reconfiguration request to the second network device to configure configuration information of a grant-free resource for the user equipment. Therefore, signaling overheads are reduced, and a communication latency is reduced.

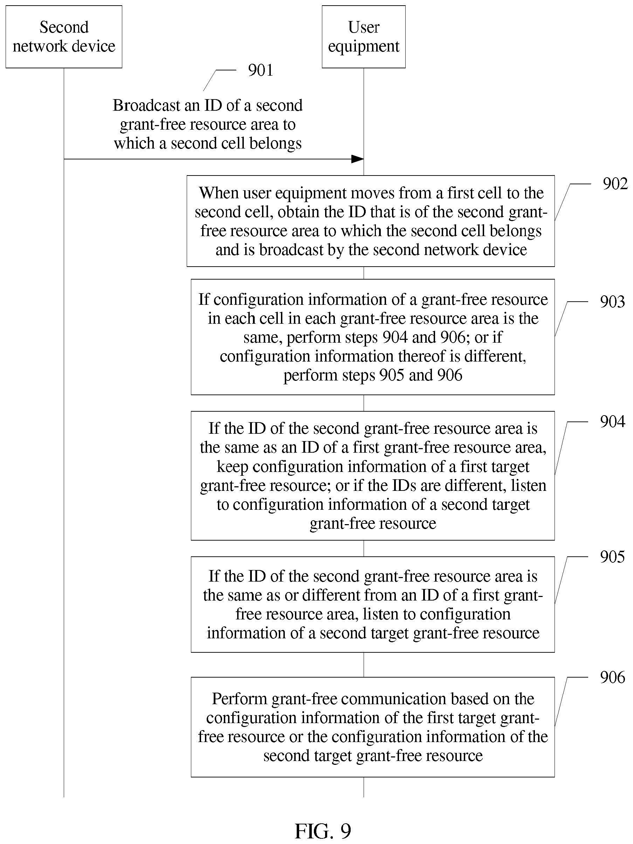

FIG. 9 is a schematic diagram of another embodiment of a grant-free resource allocation method according to an embodiment of this application. The method is mainly applied to a grant-free communications system. The grant-free communications system includes at least two grant-free resource areas, each grant-free resource area includes at least one cell, each cell in the grant-free resource area shares user equipment information, and UE may select any target resource from grant-free resources in a corresponding cell to perform data transmission. The method includes the following steps.

901. A second network device broadcasts an ID of a second grant-free resource area to which a second cell belongs.

In this embodiment of this application, the network device may define an area for cells in a network, where the area may be referred to as a grant-free resource area, and each grant-free resource area includes at least one cell. Cells in a same grant-free resource area may be neighboring or may not be neighboring. Configuration information of a grant-free resource in each cell in each grant-free resource area may be the same or may be different. In addition, each grant-free resource area further needs to be numbered. As an identity of the grant-free resource area (Grant-free resource area id), for example, the number may be 1, 2, 3, ..., N (N is an integer), or a, b, c, .... The network device broadcasts an ID of a grant-free resource area to which each cell belongs. Numbers of grant-free resource areas that fall beyond a range may be the same, as long as a grant-free resource area ID of each cell in a grant-free resource area is the same and grant-free resource area IDs of neighboring grant-free resource areas (or areas whose distances are shorter than a preset range) are different.

User equipment information shared by each cell in a same grant-free resource area may be mapping information of a grant-free resource and/or an identity ID of user equipment, and the identity ID may be specifically any one of the following: a radio network temporary identifier (RNTI, Radio Network Temporary Identifier), an international mobile subscriber identity (IMSI, International Mobile Subscriber Identity), a globally unique temporary UE identity GUTI (Globally Unique Temporary UE Identity), a temporary mobile subscriber identity (TMSI, Temporary Mobile Subscriber Identity), a slice number, and an Internet Protocol (IP, Internet Protocol) address.

The second network device broadcasts the ID of the second grant-free resource area to which the second cell belongs, and may further periodically broadcast configuration information of a second target grant-free resource in the second cell; or it may be considered that configuration information of a second target grant-free resource is preconfigured and is directly sent to the UE. This is not specifically limited. It should be understood that, the configuration information of the second target grant-free resource may be broadcast together with the ID of the second grant-free resource area, or the configuration information of the second target grant-free resource and the ID of the second grant-free resource area may be broadcast separately.

It should be noted that, in this embodiment of this application, the grant-free resource of the UE does not need to be separately configured by the network device.

902. When user equipment moves from a first cell to the second cell, the user equipment obtains the ID that is of the second grant-free resource area to which the second cell belongs and is broadcast by the second network device.

In this embodiment of this application, step 902 is the same as step 802 shown in FIG. 8. Details are not described again herein.

903. If configuration information of a grant-free resource in each cell in each grant-free resource area is the same, the user equipment performs steps 904 and 906; or if configuration information of a grant-free resource in each cell in each grant-free resource area is different, the user equipment performs steps 905 and 906.

904. If the ID of the second grant-free resource area is the same as a preobtained ID of a first grant-free resource area to which the first cell belongs, the user equipment performs step A; or if the ID of the second grant-free resource area is different from a preobtained ID of a first grant-free resource area to which the first cell belongs, the user equipment performs step B.

In this embodiment of this application, if a protocol specifies in advance that a grant-free resource configuration of each cell in each grant-free resource area is the same, the UE determines whether the demodulated ID of the grant-free resource area to which the second cell belongs is consistent with the ID that is of the grant-free resource area to which the first cell belongs and is stored by the UE. If the IDs are consistent, the UE performs step A: The UE keeps the UE ID allocated to the UE when the UE is in the first cell, and keeps configuration information of a first target grant-free resource in the first cell, that is, keeps configuration information of the grant-free resource of the UE in the first cell, and does not need to listen to configuration information that is of a grant-free resource of a cell and is sent subsequently. To be specific, the UE does not need to listen to the configuration information that is of the second target grant-free resource in the second cell and is sent by the second network device.

If the IDs are inconsistent, the UE performs step B: The UE updates the ID that is of the grant-free resource area to which the first cell belongs and is stored by the UE, to the currently received ID of the grant-free resource area to which the second cell belongs, and listens to configuration information that is of a grant-free resource of a cell and is sent subsequently. To be specific, the UE needs to listen to the configuration information that is of the second target grant-free resource in the second cell and is sent by the second network device.

For example, if the ID of the grant-free resource area to which the second cell belongs is consistent with the ID that is of the grant-free resource area to which the first cell belongs and is stored by the UE, the UE may perform grant-free communication by using the configuration information of the first target grant-free resource in the first cell; or if the ID of the grant-free resource area to which the second cell belongs is inconsistent with the ID that is of the grant-free resource area to which the first cell belongs and is stored by the UE, the UE needs to listen to the configuration information that is of the second target grant-free resource in the second cell and is sent by the second network device. To be specific, the UE obtains the configuration information of the second target grant-free resource in the second cell, and may perform grant-free communication by using the configuration information of the second target grant-free resource.

905. If the ID of the second grant-free resource area is the same as a preobtained ID of a first grant-free resource area to which the first cell belongs, the user equipment performs step C; or if the ID of the second grant-free resource area is different from a preobtained ID of a first grant-free resource area to which the first cell belongs, the user equipment performs step D.

In this embodiment of this application, if a protocol specifies in advance that a grant-free resource configuration of each cell in each grant-free resource area may be different, the UE determines whether the demodulated ID of the grant-free resource area to which the second cell belongs is consistent with the ID that is of the grant-free resource area to which the first cell belongs and is stored by the UE. If the IDs are consistent, the UE performs step C: The UE keeps the UE ID allocated to the UE when the UE is in the first cell, and continues to listen to the configuration information that is of the second target grant-free resource in the second cell and is sent by the second network device.

If the IDs are inconsistent, the UE performs step D: The UE updates the ID that is of the grant-free resource area to which the first cell belongs and is stored by the UE, to the currently received ID of the grant-free resource area to which the second cell belongs, and needs to listen to the configuration information that is of the second target grant-free resource in the second cell and is sent by the second network device.

For example, if the ID of the grant-free resource area to which the second cell belongs is consistent with the ID that is of the grant-free resource area to which the first cell belongs and is stored by the UE, the UE may further listen to the configuration information that is of the second target grant-free resource in the second cell and is sent by the second network device. To be specific, the UE obtains the configuration information of the second target grant-free resource in the second cell, and may perform grant-free communication by using the configuration information of the second target grant-free resource. If the ID of the grant-free resource area to which the second cell belongs is inconsistent with the ID that is of the grant-free resource area to which the first cell belongs and is stored by the UE, the UE also further needs to listen to the configuration information that is of the second target grant-free resource in the second cell and is sent by the second network device. To be specific, the UE obtains the configuration information of the second target grant-free resource in the second cell, and may perform grant-free communication by using the configuration information of the second target grant-free resource.

906. The user equipment performs grant-free communication based on the configuration information of the first target grant-free resource or the configuration information of the second target grant-free resource.

In this embodiment of this application, based on analysis in step 904 or 905, the user equipment may perform grant-free communication based on the configuration information of the first target grant-free resource or the configuration information of the second target grant-free resource.

In an actual application, after step 904 or 905, a random access process further needs to be initiated. Specifically, if the ID that is of the grant-free resource area to which the second cell belongs and is broadcast by a target base station and received by the UE is inconsistent with the ID that is of the grant-free resource area to which the first cell belongs and is stored by the UE, a RACH process is initiated; and depending on a location of the UE, the target BS may determine whether the UE ID needs to be reconfigured. If the UE ID needs to be reconfigured, the target BS may add the UE ID to a random access request initiated in the random access process.

Further, in an actual application, the network device and the UE in the grant-free resource area may jointly maintain a timer. After the UE completes uplink or downlink data transmission for a time, the timer is started; before the timer expires, if the network device receives uplink data transmitted by the UE, or the network device needs to transmit downlink data to the UE, the timer is stopped; and if the timer expires, the network device releases the maintained UE ID, and the UE also releases the UE ID, and enters an idle state.

The user equipment and the network device may jointly maintain a timer. Therefore, under control of the timer, utilization of the grant-free resource is improved. After the timer expires, the user equipment releases the configuration information of the current grant-free resource, so that other user equipment can use the configuration information of the grant-free resource.

It should be noted that, when the user equipment needs to initiate a grant-free resource reconfiguration request, refer to the descriptions in the foregoing embodiment shown in FIG. 5, FIG. 6, or FIG. 7. Details are not described again herein.

This embodiment of this application may be applied to the grant-free communications system. The grant-free communications system includes at least two grant-free resource areas, each grant-free resource area includes at least one cell, each cell in the grant-free resource area shares the user equipment information, and the UE may select any target resource from grant-free resources in a corresponding cell to perform data transmission. When the user equipment moves from the first cell to the second cell, the user equipment obtains the ID that is of the second grant-free resource area to which the second cell belongs and is broadcast by the second network device.
(1) If the configuration information of the grant-free resource of each cell in each grant-free resource area is the same, and the ID of the grant-free resource area to which the second cell belongs is consistent with the ID that is of the grant-free resource area to which the first cell belongs and is stored by the UE, the UE may perform grant-free communication by using the configuration information of the first target grant-free resource in the first cell; or if the configuration information of the grant-free resource of each cell in each grant-free resource area is the same, and the ID of the grant-free resource area to which the second cell belongs is inconsistent with the ID that is of the grant-free resource area to which the first cell belongs and is stored by the UE, the UE needs to listen to the configuration information that is of the second target grant-free resource in the second cell and is sent by the second network device, and may perform grant-free communication by using the configuration information of the second target grant-free resource.
(2) If the configuration information of the grant-free resource of each cell in each grant-free resource area is different, regardless of whether the ID of the grant-free resource area to which the second cell belongs is consistent with the ID that is of the grant-free resource area to which the first cell belongs and is stored by the UE, the UE needs to listen to the configuration information that is of the second target grant-free resource in the second cell and is sent by the second network device, and may perform grant-free communication by using the configuration information of the second target grant-free resource. To be specific, the UE does not need to initiate a resource reconfiguration request to the second network device to reconfigure configuration information of a grant-free resource for the user equipment. Therefore, signaling overheads are reduced, and a communication latency is reduced.

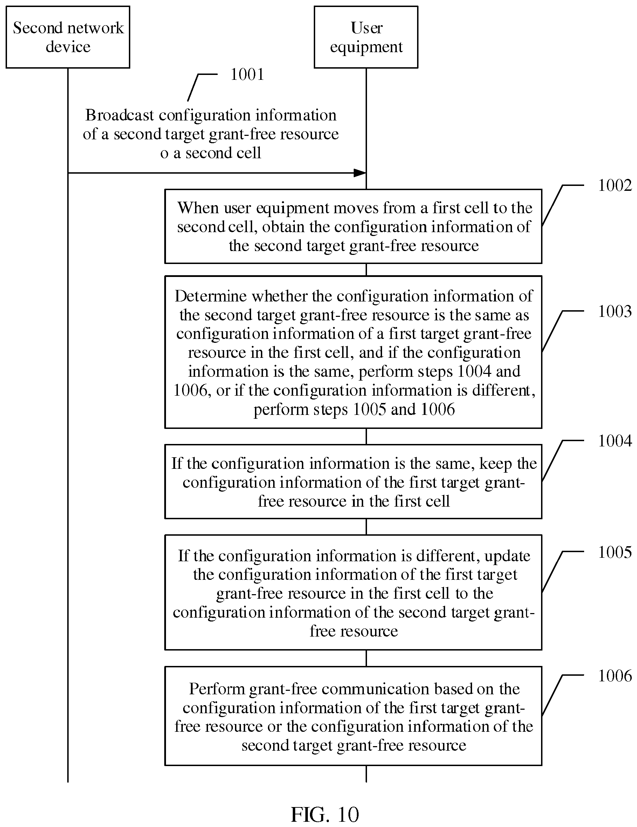

FIG. 10 is a schematic diagram of another embodiment of a grant-free resource allocation method according to an embodiment of this application. The method is mainly applied to a grant-free communications system. The grant-free communications system includes at least two grant-free resource areas, each grant-free resource area includes at least one cell, each cell in the grant-free resource area shares user equipment information, and configuration information of a grant-free resource of each cell in the grant-free resource area is the same. The method includes the following steps.

1001. A second network device broadcasts configuration information of a second target grant-free resource in a second cell.

In this embodiment of this application, the network device may define an area for cells in a network, where the area may be referred to as a grant-free resource area, and each grant-free resource area includes at least one cell. Cells in a same grant-free resource area may be neighboring or may not be neighboring. Configuration information of a grant-free resource in each cell in each grant-free resource area may be the same. It should be noted that, each grant-free resource area does not need to be numbered, because it is specified in advance that the configuration information of the grant-free resource of each cell in each grant-free resource area is the same.

User equipment information shared by each cell in a same grant-free resource area may be mapping information of a grant-free resource and/or an identity ID of user equipment, and the identity ID may be specifically any one of the following: a radio network temporary identifier (RNTI, Radio Network Temporary Identifier), an international mobile subscriber identity (IMSI, International Mobile Subscriber Identity), a globally unique temporary UE identity GUTI (Globally Unique Temporary UE Identity), a temporary mobile subscriber identity (TMSI, Temporary Mobile Subscriber Identity), a slice number, and an Internet Protocol (IP, Internet Protocol) address.

The second network device broadcasts the configuration information of the second target grant-free resource in the second cell. To be specific, the configuration information of the second target grant-free resource includes any grant-free resource selected by a second network device for the UE. Herein the broadcasting is periodically broadcasting. It should be noted that, in this embodiment of this application, the grant-free resource of the UE does not need to be separately configured by the network device.

1002. When user equipment moves from a first cell to the second cell, the user equipment obtains the configuration information that is of the second target grant-free resource in the second cell and is broadcast by the second network device.

In this embodiment of this application, when the user equipment moves from the first cell to the second cell, the user equipment obtains the configuration information that is of the second target grant-free resource in the second cell and is broadcast by the second network device. Specifically further, when the user equipment is in an inactive state or a connected state, and the user equipment moves from the first cell to the second cell, the user equipment may obtain the configuration information that is of the second target grant-free resource in the second cell and is broadcast by the second network device.

1003. The user equipment determines whether the configuration information of the second target grant-free resource is the same as preobtained configuration information of a first target grant-free resource in the first cell, and if the configuration information is the same, performs steps 1004 and 1006, or if the configuration information is different, performs steps 1005 and 1006.

1004. If the configuration information is the same, the user equipment keeps the configuration information of the first target grant-free resource in the first cell.

In this embodiment of this application, if the configuration information of the second target grant-free resource is the same as the preobtained configuration information of the first target grant-free resource in the first cell, the user equipment keeps the configuration information of the first target grant-free resource in the first cell, and may perform grant-free communication directly by using the configuration information of the first target grant-free resource.

1005. If the configuration information is different, the user equipment updates the configuration information of the first target grant-free resource in the first cell to the configuration information of the second target grant-free resource.

In this embodiment of this application, if the configuration information of the second target grant-free resource is different from the preobtained configuration information of the first target grant-free resource in the first cell, the user equipment updates the configuration information of the first target grant-free resource in the first cell to the configuration information of the second target grant-free resource, and may perform grant-free communication directly by using the configuration information of the second target grant-free resource.

1006. The user equipment performs grant-free communication based on the configuration information of the first target grant-free resource or the configuration information of the second target grant-free resource.

In this embodiment of this application, if step 1006 follows step 1004, the user equipment may perform grant-free communication based on the configuration information of the first target grant-free resource; or if step 1006 follows step 1005, the user equipment may perform grant-free communication based on the configuration information of the second target grant-free resource.

In an actual application, after step 1004 or 1005, a random access process further needs to be initiated. Specifically, if an ID that is of a grant-free resource area to which the second cell belongs and is broadcast by a target base station and received by the UE is inconsistent with an ID that is of a grant-free resource area to which the first cell belongs and is stored by the UE, a RACH process is initiated; and depending on a location of the UE, the target BS may determine whether the UE ID needs to be reconfigured. If the UE ID needs to be reconfigured, the BS may add the UE ID to a random access request initiated in the random access process.

Further, in an actual application, the network device and the UE in the grant-free resource area may jointly maintain a timer. After the UE completes uplink or downlink data transmission for a time, the timer is started; before the timer expires, if the network device receives uplink data transmitted by the UE, or the network device needs to transmit downlink data to the UE, the timer is stopped; and if the timer expires, the network device releases the maintained UE ID, and the UE also releases the UE ID, and enters an idle state.

The user equipment and the network device may jointly maintain a timer. Therefore, under control of the timer, utilization of the grant-free resource is improved. After the timer expires, the user equipment releases the configuration information of the current grant-free resource, so that other user equipment can use the configuration information of the grant-free resource.

It should be noted that, when the user equipment needs to initiate a grant-free resource reconfiguration request, refer to the descriptions in the foregoing embodiment shown in FIG. 5, FIG. 6, or FIG. 7. Details are not described again herein.

This embodiment of this application may be applied to the grant-free communications system. The grant-free communications system includes at least two grant-free resource areas, each grant-free resource area includes at least one cell, each cell in the grant-free resource area shares the user equipment information, and the configuration information of the grant-free resource of each cell in the grant-free resource area is the same. When the user equipment moves from the first cell to the second cell, the user equipment obtains the configuration information that is of the second target grant-free resource in the second cell and is broadcast by the second network device; the user equipment determines whether the configuration information of the second target grant-free resource is the same as the preobtained configuration information of the first target grant-free resource in the first cell; and if the configuration information is the same, the user equipment keeps the configuration information of the first target grant-free resource in the first cell; or if the configuration information is different, the user equipment updates the configuration information of the first target grant-free resource in the first cell to the configuration information of the second target grant-free resource. To be specific, the UE does not need to initiate a resource reconfiguration request to the second network device to reconfigure configuration information of a grant-free resource for the user equipment. Therefore, signaling overheads are reduced, and a communication latency is reduced.

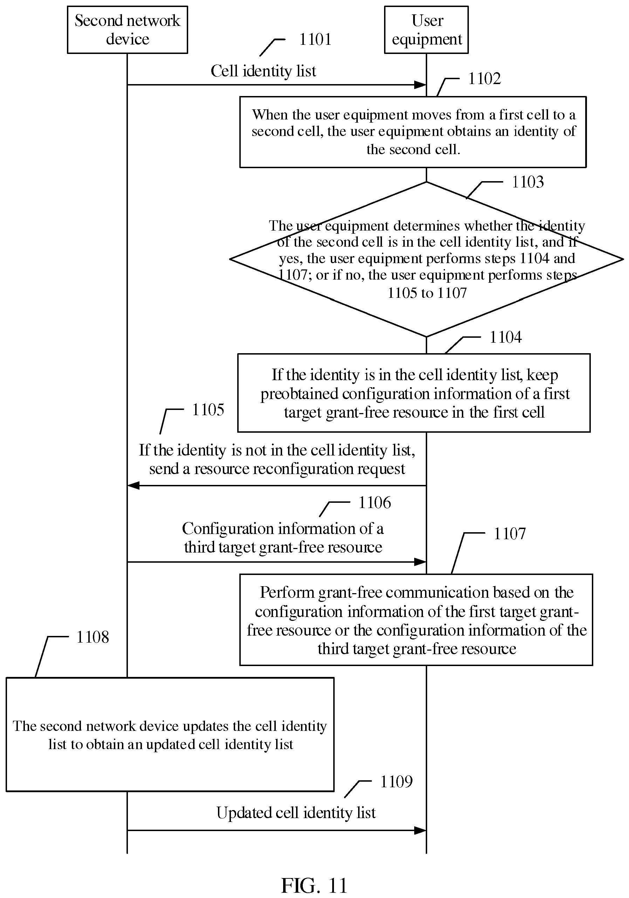

FIG. 11 is a schematic diagram of another embodiment of a grant-free resource allocation method according to an embodiment of this application. The method is mainly applied to a grant-free communications system. The grant-free communications system includes at least two grant-free resource areas, each grant-free resource area includes at least one cell, each cell in the grant-free resource area shares user equipment information, and configuration information of a grant-free resource of each cell in a cell identity list is the same. The method includes the following steps.

1101. A second network device sends a cell identity list to user equipment.

In this embodiment of this application, step 1101 may include the following step a and step b:
a. The second network device sends the cell identity list to the user equipment, where each cell in the cell identity list belongs to a same grant-free resource area.
b. The user equipment receives the cell identity list sent by the second network device.

This embodiment of this application is similar to centralized management, where each grant-free resource area is not numbered. To be specific, the second network device (a target base station) does not broadcast a grant-free resource ID, and may first collect configuration information of a grant-free resource in each cell in a preset range, and determine a cell identity list cell list, where configuration information of a grant-free resource in each cell in the cell identity list is the same.

The cell identity list may be a list of cell IDs, or may be a list of physical cell identifiers (PCI, physical cell identifier) of cells, or may be a list of other information of cells. Each cell in each grant-free resource area shares user equipment information. The user equipment information is mapping information and/or an identity ID of a grant-free resource of the user equipment, and the identity ID is specifically any one of the following: a radio network temporary identifier RNTI, an international mobile subscriber identity IMSI, a globally unique temporary UE identity GUTI, a temporary mobile subscriber identity TMSI, a slice number, and an IP address.

1102. When the user equipment moves from a first cell to a second cell, the user equipment obtains an identity of the second cell.

In this embodiment of this application, when the user equipment moves from the first cell to the second cell, the user equipment obtains the identity of the second cell. To be specific, when the user equipment is in an inactive state or a connected state, and the user equipment moves from the first cell to the second cell, the user equipment may obtain an ID or a PCI of the second cell.

1103. The user equipment determines whether the identity of the second cell is in the cell identity list, and if yes, the user equipment performs steps 1104 and 1107; or if no, the user equipment performs steps 1105 to 1107.

1104. If the identity is in the cell identity list preobtained by the user equipment, the user equipment keeps preobtained configuration information of a first target grant-free resource in the first cell, where each cell in the cell identity list belongs to a same grant-free resource area.

In this embodiment of this application, if the identity is in the cell identity list preobtained by the user equipment, the user equipment keeps the preobtained configuration information of the first target grant-free resource in the first cell. By default, configuration information of grant-free resources of the first cell and the second cell is the same. The user equipment may keep the preobtained configuration information of the first target grant-free resource in the first cell. In addition, the user equipment may further obtain configuration information that is of a second target grant-free resource in the second cell and is broadcast by the second network device; and if the configuration information of the first target grant-free resource in the first cell is different from the configuration information of the second target grant-free resource in the second cell, the user equipment performs grant-free communication based on the configuration information of the second target grant-free resource.

1105. If the identity is not in the cell identity list preobtained by the user equipment, the user equipment sends a resource reconfiguration request to the second network device.

In this embodiment of this application, step 1105 may include the following step a and step b:
a. If the identity is not in the cell identity list preobtained by the user equipment, the user equipment sends the resource reconfiguration request to the second network device.
b. The second network device receives the resource reconfiguration request sent by the user equipment.

1106. The second network device sends configuration information of a third target grant-free resource to the user equipment.

In this embodiment of this application, step 1106 follows step 1105, and is the same as step 807 shown in FIG. 8. Details are not described again herein. Step 1106 may include the following step c and step d:
c. The second network device sends the configuration information of the third target grant-free resource to the user equipment, where the configuration information of the third target grant-free resource is used by the user equipment to perform grant-free communication.
d. The user equipment obtains the configuration information that is of the third target grant-free resource and is sent by the second network device.

1107. The user equipment performs grant-free communication based on the configuration information of the first target grant-free resource or the configuration information of the third target grant-free resource.

In this embodiment of this application, the user equipment performs grant-free communication based on the configuration information of the first target grant-free resource, the configuration information of the second target grant-free resource, or the configuration information of the third target grant-free resource.

1108. The second network device updates the cell identity list to obtain an updated cell identity list.

In this embodiment of this application, the identity list may be further updated based on the reconfigured configuration information of the grant-free resource. Specifically, if the configuration information of the third target grant-free resource is different from the configuration information that is of the first target grant-free resource and is sent in advance by the first network device to the user equipment, the second network device updates the cell identity list to obtain the updated cell identity list.

1109. The second network device sends the updated cell identity list to the user equipment.

In this embodiment of this application, step 1109 may include the following step e and step f:
e. The second network device sends the updated cell identity list to the user equipment, where the updated cell identity list includes the identity of the second cell.
f. The user equipment receives the updated cell identity list sent by the second network device.

It should be noted that, steps 1108 and 1109 are optional steps. Whether the optional steps need to be performed in an actual application may be determined based on an actual requirement, and a time sequence between the optional steps and steps 1106 and 1107 is not limited. The configuration information of the grant-free resource used by the user equipment may be separately configured for the user equipment, or may not be separately configured.

In this embodiment of this application, when the user equipment moves from the first cell to the second cell, the user equipment obtains the identity of the second cell; if the identity is in the cell identity list preobtained by the user equipment, because the configuration information of the grant-free resource in each cell in the cell identity list is the same, the user equipment keeps the preobtained configuration information of the first target grant-free resource in the first cell, where each cell in the cell identity list belongs to the same grant-free resource area; and the user equipment may perform grant-free communication directly by using the configuration information of the first target grant-free resource. Therefore, signaling overheads are reduced, and a communication latency is reduced. Further, if the identity is not in the cell identity list preobtained by the user equipment, the user equipment sends the resource reconfiguration request to the target network device, and receives the configuration information that is of the third target grant-free resource and is sent by the second network device; and the user equipment performs grant-free communication based on the configuration information of the third target grant-free resource.

It should be noted that, in the foregoing embodiments, some configuration information of grant-free resources of the UE is separately configured by the network device, and some is notified by the network device by broadcast or multicast, but there is no difference in essence. This does not affect applicability of the method in each embodiment, because even if configuration information of a grant-free resource does not need to be configured separately, the UE needs to obtain configuration information of a grant-free resource broadcast or multicast by the network device and randomly select a CTU for performing grant-free communication. Therefore, the configuration information also needs to be obtained and stored by the UE.

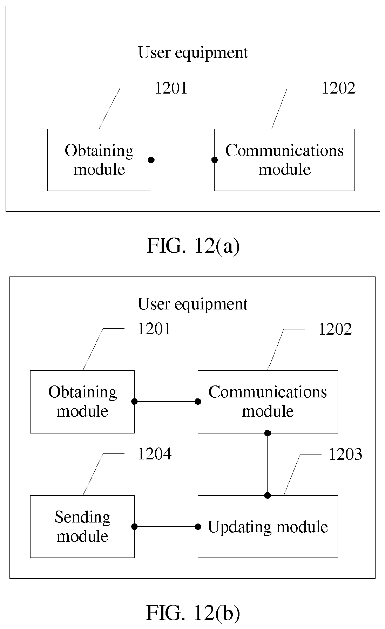

FIG. 12(a) is a schematic diagram of an embodiment of user equipment according to an embodiment of this application. The user equipment is applied to a grant-free communications system. The grant-free communications system includes at least two grant-free resource areas, each grant-free resource area includes at least one cell, and each cell in the grant-free resource area shares user equipment information. The user equipment may include:
an obtaining module 1201, configured to: when the user equipment moves from a first cell to a second cell, obtain an ID that is of a second grant-free resource area to which the second cell belongs and is broadcast by a second network device; and
a communications module 1202, configured to: if the ID of the second grant-free resource area is the same as a preobtained ID of a first grant-free resource area to which the first cell belongs, perform grant-free communication based on a first UE ID corresponding to the first cell.

Optionally, in some embodiments of this application,
the communications module 1202 is specifically configured to perform grant-free communication based on the first UE ID corresponding to the first cell and configuration information of a first target grant-free resource in the first cell.

Optionally, in some embodiments of this application,
the obtaining module 1201 is further configured to obtain configuration information that is of a second target grant-free resource in the second cell and is sent by the second network device; and
the communications module 1202 is specifically configured to perform grant-free communication based on the first UE ID corresponding to the first cell and the configuration information of the second target grant-free resource in the second cell.

Optionally, in some embodiments of this application, based on FIG. 12(a), FIG. 12(b) is a schematic diagram of another embodiment of the user equipment according to an embodiment of this application. The user equipment may further include:
an updating module 1203, configured to: if the ID of the second grant-free resource area is different from the preobtained ID of the first grant-free resource area to which the first cell belongs, update the ID of the first grant-free resource area to the ID of the second grant-free resource area; and
a sending module 1204, configured to send a resource reconfiguration request to the second network device; where
the obtaining module 1201 is further configured to obtain configuration information that is of a third target grant-free resource and is sent by the second network device.

Optionally, in some embodiments of this application, the user equipment information is mapping information and/or an identifier ID of a grant-free resource of the user equipment.

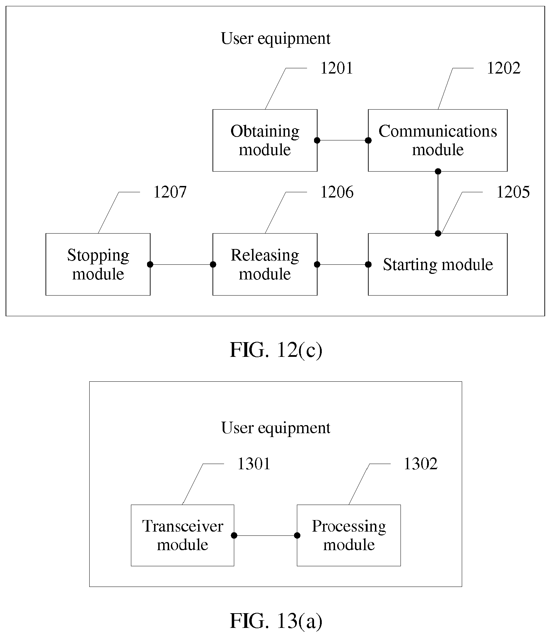

Optionally, in some embodiments of this application, based on FIG. 12(a), FIG. 12(c) is a schematic diagram of another embodiment of the user equipment according to an embodiment of this application. The user equipment may further include:
a starting module 1205, configured to: after the user equipment completes data transmission, start a timer;
a releasing module 1206, configured to: if the timer expires, release configuration information of a current grant-free resource, where the configuration information of the current grant-free resource is the configuration information of the first target grant-free resource or the configuration information of the second target grant-free resource; and
a stopping module 1207, configured to: if the timer does not expire, and after the user equipment currently performs data transmission with the second network device, stop the timer.

FIG. 13(a) is a schematic diagram of another embodiment of user equipment according to an embodiment of this application. The user equipment is applied to a grant-free communications system. The grant-free communications system includes at least two grant-free resource areas, each grant-free resource area includes at least one cell, and each cell in the grant-free resource area shares user equipment information. The user equipment may include:
a transceiver module 1301, configured to: when the user equipment moves from a first cell to a second cell, obtain an identity of the second cell; and
a processing module 1302, configured to: if the identity is in a cell identity list preobtained by the user equipment, perform grant-free communication based on a first UE ID corresponding to the first cell, where each cell in the cell identity list belongs to a same grant-free resource area; where
the transceiver module 1301 is further configured to: if the identity is not in a cell identity list preobtained by the user equipment, send, by the transceiver module, a resource reconfiguration request to a second network device, and receive configuration information that is of a third target grant-free resource and is sent by the second network device; and
the processing module 1302 is further configured to perform grant-free communication based on the configuration information of the third target grant-free resource.

Optionally, in some embodiments of this application, the processing module 1302 is specifically configured to perform grant-free communication based on the first UE ID corresponding to the first cell and configuration information of a first target grant-free resource in the first cell.

Optionally, in some embodiments of this application, the transceiver module 1301 is further configured to obtain configuration information that is of a second target grant-free resource in the second cell and is sent by the second network device; and
the processing module 1302 is specifically configured to: if the configuration information of the second target grant-free resource is different from the configuration information of the first target grant-free resource, perform grant-free communication based on the first UE ID corresponding to the first cell and the configuration information of the second target grant-free resource.

Optionally, in some embodiments of this application, the user equipment information is mapping information and/or an identifier ID of a grant-free resource of the user equipment.

Optionally, in some embodiments of this application, the transceiver module 1301 is further configured to receive an updated cell identity list sent by the second network device.

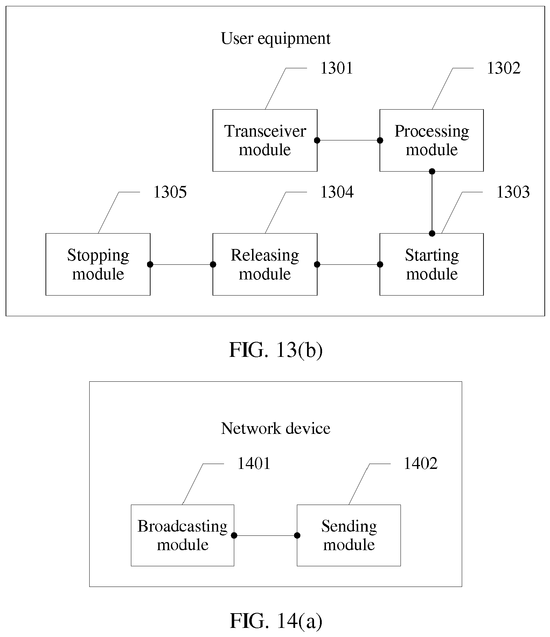

Optionally, in some embodiments of this application, based on FIG. 13(a), FIG. 13(b) is a schematic diagram of another embodiment of the user equipment according to an embodiment of this application. The user equipment may further include:
a starting module 1303, configured to: after the user equipment completes data transmission, start a timer;
a releasing module 1304, configured to: if the timer expires, release configuration information of a current grant-free resource, where the configuration information of the current grant-free resource is the configuration information of the first target grant-free resource or the configuration information of the second target grant-free resource; and
a stopping module 1305, configured to: if the timer does not expire, and after the user equipment currently performs data transmission with the second network device, stop the timer.

FIG. 14(a) is a schematic diagram of an embodiment of a network device according to an embodiment of this application. The network device is applied to a grant-free communications system. The grant-free communications system includes at least two grant-free resource areas, each grant-free resource area includes at least one cell, and each cell in the grant-free resource area shares user equipment information. The network device may include:
a broadcasting module 1401, configured to broadcast an ID of a second grant-free resource area to which a second cell belongs; and
a sending module 1402, configured to send, to user equipment, configuration information of a second target grant-free resource in the second cell, where the configuration information of the second target grant-free resource is used by the user equipment to perform grant-free communication.

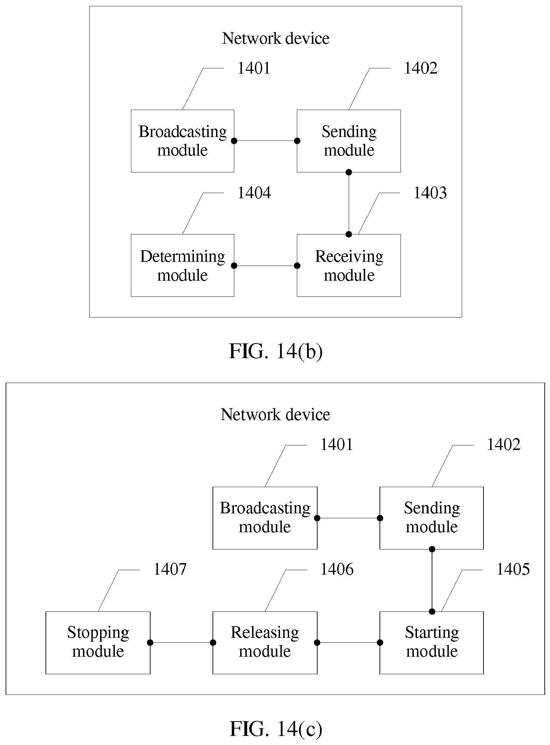

Optionally, in some embodiments of this application, based on FIG. 14(a), FIG. 14(b) is a schematic diagram of another embodiment of the network device according to an embodiment of this application. The network device may further include:
a receiving module 1403, configured to receive a resource reconfiguration request sent by the user equipment; and
a determining module 1404, configured to perform resource allocation based on the resource reconfiguration request, and determine configuration information of a third target grant-free resource; where
the sending module 1402 is further configured to send the configuration information of the third target grant-free resource to the user equipment, where the configuration information of the third target grant-free resource is used by the user equipment to perform grant-free communication.

Optionally, in some embodiments of this application, the user equipment information is mapping information and/or an identifier ID of a grant-free resource of the user equipment.

Optionally, in some embodiments of this application, based on FIG. 14(a), FIG. 14(c) is a schematic diagram of another embodiment of the network device according to an embodiment of this application. The network device may further include:
a starting module 1405, configured to: after the network device completes data transmission, start a timer;
a releasing module 1406, configured to: if the timer expires, release configuration information of a current grant-free resource, where the configuration information of the current grant-free resource is configuration information of a first target grant-free resource or the configuration information of the second target grant-free resource; and
a stopping module 1407, configured to: if the timer does not expire, and after the user equipment currently performs data transmission with the second network device, stop the timer.

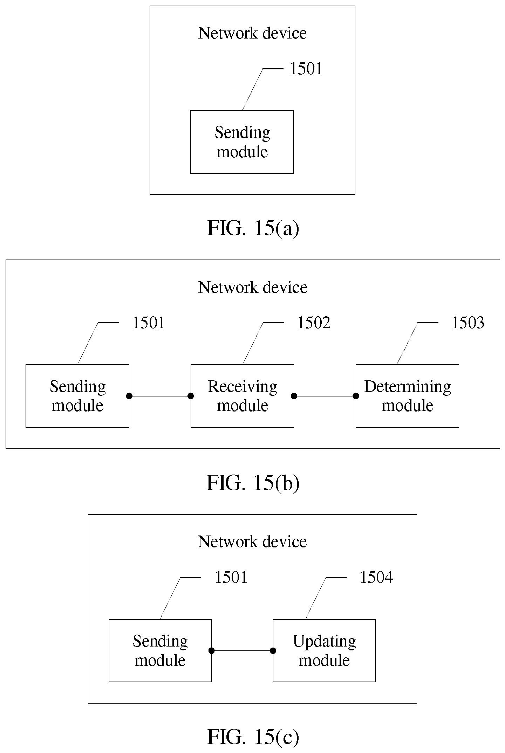

FIG. 15(a) is a schematic diagram of an embodiment of a network device according to an embodiment of this application. The network device is applied to a grant-free communications system. The grant-free communications system includes at least two grant-free resource areas, each grant-free resource area includes at least one cell, and each cell in the grant-free resource area shares user equipment information. The network device may include:
a sending module 1501, configured to send a cell identity list to user equipment, where each cell in the cell identity list belongs to a same grant-free resource area; and further configured to send, to the user equipment, configuration information of a second target grant-free resource in a second cell, where the configuration information of the second target grant-free resource is used by the user equipment to perform grant-free communication.

Optionally, in some embodiments of this application, based on FIG. 15(a), FIG. 15(b) is a schematic diagram of another embodiment of the network device according to an embodiment of this application. The network device may further include:
a receiving module 1502, configured to receive a resource reconfiguration request sent by the user equipment; and
a determining module 1503, configured to perform resource allocation based on the resource reconfiguration request, and determine configuration information of a third target grant-free resource; where
the sending module 1501 is further configured to send the configuration information of the third target grant-free resource to the user equipment, where the configuration information of the third target grant-free resource is used by the user equipment to perform grant-free communication.

Optionally, in some embodiments of this application, the user equipment information is mapping information and/or an identifier ID of a grant-free resource of the user equipment.

Optionally, in some embodiments of this application, based on FIG. 15(a), FIG. 15(c) is a schematic diagram of another embodiment of the network device according to an embodiment of this application. The network device may further include:
an updating module 1504, configured to update the cell identity list to obtain an updated cell identity list; where
the sending module 1501 is further configured to send the updated cell identity list to the user equipment, where the updated cell identity list includes an identity of the second cell.

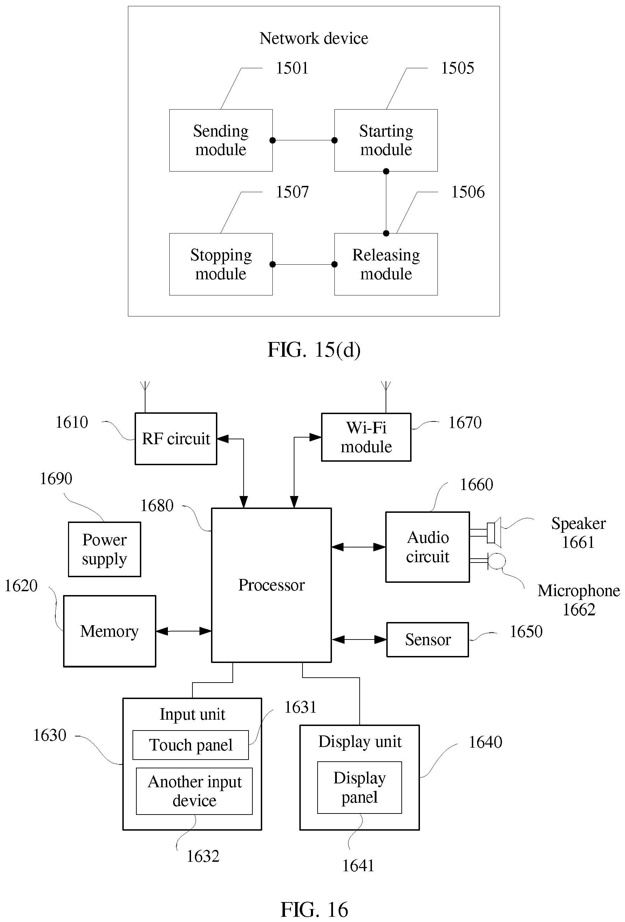

Optionally, in some embodiments of this application, based on FIG. 15(a), FIG. 15(d) is a schematic diagram of another embodiment of the network device according to an embodiment of this application. The network device may further include:
a starting module 1505, configured to: after the network device completes data transmission, start a timer;
a releasing module 1506, configured to: if the timer expires, release configuration information of a current grant-free resource, where the configuration information of the current grant-free resource is configuration information of a first target grant-free resource or the configuration information of the second target grant-free resource; and
a stopping module 1507, configured to: if the timer does not expire, and after the user equipment currently performs data transmission with the second network device, stop the timer.

FIG. 16 is a schematic diagram of another embodiment of user equipment according to an embodiment of this application. For ease of description, only parts related to this embodiment of the present disclosure are illustrated. For specific technical details that are not disclosed, refer to the method part in the embodiments of the present disclosure. The user equipment may be any terminal device, including a mobile phone, a tablet computer, a PDA (Personal Digital Assistant, personal digital assistant), a POS (Point of Sale, point of sale), an in-vehicle computer, or the like. For example, the user equipment is a mobile phone.

FIG. 16 is a block diagram of a partial structure of a mobile phone related to user equipment according to an embodiment of this application. Referring to FIG. 16, the mobile phone includes components such as a radio frequency (Radio Frequency, RF) circuit 1610, a memory 1620, an input unit 1630, a display unit 1640, a sensor 1650, an audio circuit 1660, a Wireless Fidelity (Wireless Fidelity, Wi-Fi) module 1670, a processor 1680, and a power supply 1690. Persons skilled in the art may understand that, the structure of the mobile phone shown in FIG. 16 does not constitute a limitation to the mobile phone. A quantity of components included may be greater or less than that shown in the figure, or some components are combined, or component arrangements are different.

The following describes each component of the mobile phone in detail with reference to FIG. 16.

The RF circuit 1610 may be configured to receive or transmit signals in an information reception or transmission or call process, and in particular, after receiving downlink information from a network device, transmit the downlink information to the processor 1680 for processing, and in addition, transmit uplink data to the network device. Generally, the RF circuit 1610 includes but is not limited to an antenna, at least one amplifier, a transceiver, a coupler, a low noise amplifier (Low Noise Amplifier, LNA), a duplexer, or the like. In addition, the RF circuit 1610 may further communicate with a network and other devices through wireless communication. The wireless communication may be based on any communications standard or protocol, including but not limited to the Global System for Mobile communication (Global System for Mobile communication, GSM), general packet radio service (General Packet Radio Service, GPRS), Code Division Multiple Access (Code Division Multiple Access, CDMA), Wideband Code Division Multiple Access (Wideband Code Division Multiple Access, WCDMA), Long Term Evolution (Long Term Evolution, LTE), e-mail, short message service (Short Message Service, SMS), and the like.

The memory 1620 may be configured to store a software program and module. The processor 1680 executes various function applications and data processing of the mobile phone by running the software program and module stored in the memory 1620. The memory 1620 may mainly include a program storage area and a data storage area. The program storage area may store an operating system, an application program required by at least one function (such as an audio playing function or an image playing function), or the like. The data storage area may store data (such as audio data or a phone book) that is created based on usage of the mobile phone, or the like. In addition, the memory 1620 may include a high-speed random access memory, and may further include a non-volatile memory, for example, at least one magnetic disk storage, a flash memory, or another non-volatile solid state memory.

The input unit 1630 may be configured to receive input digit or character information, and generate a key signal input related to a user setting and function control of the mobile phone. Specifically, the input unit 1630 may include a touch panel 1631 and another input device 1632. The touch panel 1631, also referred to as a touchscreen, may capture a touch operation of a user on or near the touch panel (for example, an operation performed by the user by using any appropriate object or accessory such as a finger or a stylus on the touch panel 1631 or near the touch panel 1631), and drive a corresponding connection apparatus according to a preset program. Optionally, the touch panel 1631 may include two parts: a touch detection apparatus and a touch controller. The touch detection apparatus detects a touch direction of the user, detects a signal generated by the touch operation, and transmits the signal to the touch controller. The touch controller receives touch information from the touch detection apparatus, converts the touch information into touch point coordinates, and transmits the touch point coordinates to the processor 1680, and can receive a command sent by the processor 1680 and execute the command. In addition, the touch panel 1631 may be a resistive touch panel, a capacitive touch panel, an infrared touch panel, or a surface acoustic wave touch panel. In addition to the touch panel 1631, the input unit 1630 may further include the another input device 1632. Specifically, the another input device 1632 may include but is not limited to one or more of a physical keyboard, a function key (such as a volume control key or a power on/off key), a trackball, a mouse, a joystick, and the like.

The display unit 1640 may be configured to display information input by the user or information provided for the user and various menus of the mobile phone. The display unit 1640 may include a display panel 1641. Optionally, the display panel 1641 may be configured in a form of a liquid crystal display (Liquid Crystal Display, LCD), an organic light-emitting diode (Organic Light-Emitting Diode, OLED), or the like. Further, the touch panel 1631 may cover the display panel 1641. When the touch panel 1631 detects a touch operation on or near the touch panel, the touch panel 1631 transmits the touch operation to the processor 1680 to determine a type of a touch event. Then the processor 1680 provides a corresponding visual output on the display panel 1641 based on the type of the touch event. Although the touch panel 1631 and the display panel 1641 are used as two independent components to implement input and output functions of the mobile phone in FIG. 16, the touch panel 1631 and the display panel 1641 may be integrated to implement the input and output functions of the mobile phone in some embodiments.

The mobile phone may further include at least one sensor 1650, for example, a light sensor, a motion sensor, or another sensor. Specifically, the light sensor may include an ambient light sensor and a proximity sensor. The ambient light sensor may adjust luminance of the display panel 1641 based on brightness of ambient light. The proximity sensor may turn off and/or backlight the display panel 1641 when the mobile phone moves to an ear. As a type of motion sensor, an accelerometer sensor may detect acceleration magnitudes in all directions (generally three axes), and when the accelerometer sensor is stationary, may detect a magnitude and a direction of gravity, and may be configured to recognize a posture application of the mobile phone (such as switching between landscape and portrait, related games, and magnetometer posture calibration), vibration recognition related functions (such as a pedometer and stroke), and the like. As regards other sensors that can be configured for the mobile phone, such as a gyroscope, a barometer, a hygrometer, a thermometer, and an infrared sensor, details are not described herein.

The audio circuit 1660, a speaker 1661, and a microphone 1662 may provide an audio interface between the user and the mobile phone. On one hand, the audio circuit 1660 may transmit an electrical signal converted from received audio data to the speaker 1661, and the speaker 1661 converts the electrical signal into an audio signal for outputting. On the other hand, the microphone 1662 converts a captured audio signal into an electrical signal, and the audio circuit 1660 converts the received electrical signal into audio data, and then outputs the audio data to the processor 1680 for processing; and then the audio data is transmitted to another mobile phone through the RF circuit 1610, or the audio data is output to the memory 1620 for further processing.

Wi-Fi is a short-distance wireless transmission technology. By using the Wi-Fi module 1670, the mobile phone may help the user send and receive e-mails, browse web pages, access streaming media, and so on. Wi-Fi provides wireless broadband Internet access for the user. Although FIG. 16 shows the Wi-Fi module 1670, it may be understood that, the Wi-Fi module 1670 is not a necessary component of the mobile phone, and may be completely omitted according to a requirement without changing the essence of the present disclosure.

The processor 1680 is a control center of the mobile phone. The processor 1680 uses various interfaces and lines to connect all parts of the entire mobile phone, and executes various functions and data processing of the mobile phone by running or executing the software program and/or module stored in the memory 1620 and invoking data stored in the memory 1620, thereby performing overall monitoring on the mobile phone. Optionally, the processor 1680 may include one or more processing units. Preferably, the processor 1680 may integrate an application processor and a modem processor. The application processor mainly processes the operating system, a user interface, an application program, and the like. The modem processor mainly processes wireless communication. It may be understood that, alternatively the modem processor may not be integrated with the processor 1680.

The mobile phone further includes the power supply 1690 (such as a battery) supplying power to each component. Preferably, the power supply may be logically connected to the processor 1680 by using a power management system, to implement functions such as charge and discharge management and power consumption management by using the power management system.

Although not shown, the mobile phone may further include a camera, a Bluetooth module, and the like. Details are not described herein.

In an implementation solution of this application, the RF circuit 1610 further has the following function: when the user equipment moves from a first cell to a second cell, the RF circuit obtains an ID that is of a second grant-free resource area to which the second cell belongs and is broadcast by a second network device; and
the processor 1680 further has the following function: if the ID of the second grant-free resource area is the same as a preobtained ID of a first grant-free resource area to which the first cell belongs, the processor performs grant-free communication based on a first UE ID corresponding to the first cell.

Optionally, in some embodiments of this application, the processor 1680 is specifically configured to perform grant-free communication based on the first UE ID corresponding to the first cell and configuration information of a first target grant-free resource in the first cell.

Optionally, in some embodiments of this application, the RF circuit 1610 is further configured to obtain configuration information that is of a second target grant-free resource in the second cell and is sent by the second network device; and the processor 1680 is specifically configured to perform grant-free communication based on the first UE ID corresponding to the first cell and the configuration information of the second target grant-free resource in the second cell.

Optionally, in some embodiments of this application, the processor 1680 is further configured to: if the ID of the second grant-free resource area is different from the preobtained ID of the first grant-free resource area to which the first cell belongs, update the ID of the first grant-free resource area to the ID of the second grant-free resource area; and the RF circuit 1610 is further configured to send a resource reconfiguration request to the second network device, and obtain configuration information that is of a third target grant-free resource and is sent by the second network device.

Optionally, in some embodiments of this application, the processor 1680 is further configured to: after the user equipment completes data transmission, start a timer; and if the timer expires, release configuration information of a current grant-free resource, where the configuration information of the current grant-free resource is the configuration information of the first target grant-free resource or the configuration information of the second target grant-free resource; or if the timer does not expire, and after the user equipment currently performs data transmission with the second network device, stop the timer.

In another implementation solution of this application, the RF circuit 1610 further has the following functions: when the user equipment moves from a first cell to a second cell, the RF circuit obtains an identity of the second cell; and if the identity is not in a cell identity list preobtained by the user equipment, the RF circuit sends a resource reconfiguration request to a second network device, and receives configuration information that is of a third target grant-free resource and is sent by the second network device; and
the processor 1680 is further configured to: if the identity is in a cell identity list preobtained by the user equipment, perform grant-free communication based on a first UE ID corresponding to the first cell, where each cell in the cell identity list belongs to a same grant-free resource area; or if the identity is in a cell identity list preobtained by the user equipment, keep preobtained configuration information of a first target grant-free resource in the first cell, where each cell in the cell identity list belongs to a same grant-free resource area; and perform grant-free communication based on the configuration information of the third target grant-free resource.

Optionally, in some embodiments of this application, the RF circuit 1610 is further configured to obtain configuration information that is of a second target grant-free resource in the second cell and is sent by the second network device; and
the processor 1680 is specifically configured to: if the configuration information of the second target grant-free resource is different from the configuration information of the first target grant-free resource, perform grant-free communication based on the first UE ID corresponding to the first cell and the configuration information of the second target grant-free resource.

Optionally, in some embodiments of this application, the RF circuit 1610 is further configured to receive an updated cell identity list sent by the second network device.

Optionally, in some embodiments of this application, the processor 1680 is further configured to: after the user equipment completes data transmission, start a timer; and if the timer expires, release configuration information of a current grant-free resource, where the configuration information of the current grant-free resource is the configuration information of the first target grant-free resource or the configuration information of the second target grant-free resource; or if the timer does not expire, and after the user equipment currently performs data transmission with the second network device, stop the timer.

It should be noted that, the user equipment in FIG. 16 may further implement the functions implemented by the user equipment in FIG. 4, FIG. 8, FIG. 9, FIG. 10, or FIG. 11. Details are not described again herein.

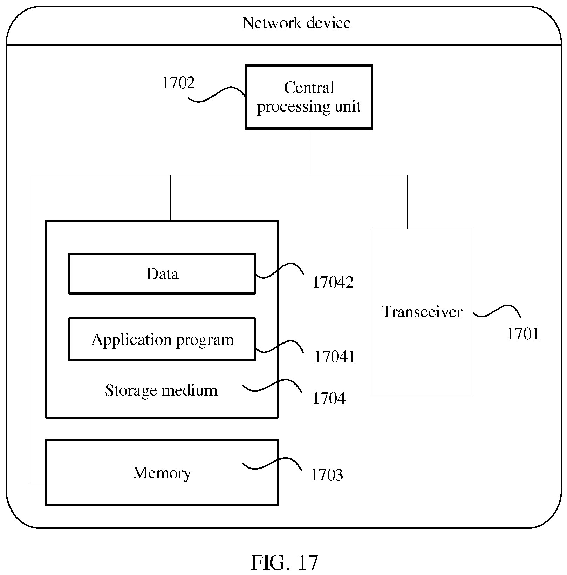

FIG. 17 is a schematic diagram of another embodiment of a network device according to an embodiment of this application.

The network device may vary greatly due to different configurations or performance, and may include a transceiver 1701, one or more central processing units (central processing units, CPU) 1702 (for example, one or more processors), a memory 1703, and one or more storage media 1704 (for example, one or more mass storage devices) storing an application program 17041 or data 17042. The memory 1703 and the storage medium 1704 may be non-transitory storage or persistent storage. The program stored in the storage medium 1704 may include one or more modules (not shown in FIG. 17), and each module may include instructions for performing a series of operations on the network device. Still further, the central processing unit 1702 may be configured to communicate with the storage medium 1704, and perform a series of operations on the network device by executing the instructions in the storage medium 1704.

In an implementation solution of this application, the transceiver 1701 is further configured to broadcast an ID of a second grant-free resource area to which a second cell belongs, and send, to user equipment, configuration information of a second target grant-free resource in the second cell, where the configuration information of the second target grant-free resource is used by the user equipment to perform grant-free communication.

Optionally, in some embodiments of this application,
the transceiver 1701 is further configured to receive a resource reconfiguration request sent by the user equipment, and send configuration information of a third target grant-free resource to the user equipment; and
the central processing unit 1702 is further configured to perform resource allocation based on the resource reconfiguration request, and determine the configuration information of the third target grant-free resource, where the configuration information of the third target grant-free resource is used by the user equipment to perform grant-free communication.

Optionally, in some embodiments of this application, the central processing unit 1702 is further configured to: after the user equipment completes data transmission, start a timer; and if the timer expires, release configuration information of a current grant-free resource, where the configuration information of the current grant-free resource is configuration information of a first target grant-free resource or the configuration information of the second target grant-free resource; or if the timer does not expire, and after the user equipment currently performs data transmission with the second network device, stop the timer.

In another implementation solution of this application, the transceiver 1701 is further configured to send a cell identity list to user equipment, where each cell in the cell identity list belongs to a same grant-free resource area; and send, to the user equipment, configuration information of a second target grant-free resource in a second cell, where the configuration information of the second target grant-free resource is used by the user equipment to perform grant-free communication.

Optionally, in some embodiments of this application,
the transceiver 1701 is further configured to receive a resource reconfiguration request sent by the user equipment, and send configuration information of a third target grant-free resource to the user equipment; and
the central processing unit 1702 is further configured to perform resource allocation based on the resource reconfiguration request, and determine the configuration information of the third target grant-free resource, where the configuration information of the third target grant-free resource is used by the user equipment to perform grant-free communication.

Optionally, in some embodiments of this application,
the central processing unit 1702 is further configured to update the cell identity list to obtain an updated cell identity list; and
the transceiver 1701 is further configured to send the updated cell identity list to the user equipment, where the updated cell identity list includes an identity of the second cell.

Optionally, in some embodiments of this application, the central processing unit 1702 is further configured to: after the user equipment completes data transmission, start a timer; and if the timer expires, release configuration information of a current grant-free resource, where the configuration information of the current grant-free resource is configuration information of a first target grant-free resource or the configuration information of the second target grant-free resource; or if the timer does not expire, and after the user equipment currently performs data transmission with the second network device, stop the timer.

It should be noted that, the network device in FIG. 17 may further implement the functions implemented by the network device in FIG. 4, FIG. 8, FIG. 9, FIG. 10, or FIG. 11. Details are not described again herein.

An embodiment of the present disclosure further provides a storage medium. It should be noted that, the technical solutions of the present disclosure essentially, or the part contributing to the prior art, or all or a part of the technical solutions may be implemented in a form of a software product. The computer software product is stored in the storage medium. The storage medium is configured to store a computer software instruction used by the foregoing user equipment or second network device and includes a program designed for the user equipment or the second network device to perform the method in in FIG. 4, FIG. 8, FIG. 9, FIG. 10, or FIG. 11. The storage medium includes any medium that can store program code, such as a USB flash drive, a removable hard disk, a read-only memory (English: Read-Only Memory, ROM for short), a random access memory (English: Random Access Memory, RAM for short), a magnetic disk, or an optical disc.

It may be clearly understood by persons skilled in the art that, for the purpose of convenient and brief description, for a detailed working process of the foregoing system, apparatus, and unit, reference may be made to a corresponding process in the foregoing method embodiments, and details are not described again herein.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in the embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A grant-free resource allocation method, wherein the method is applied to a grant-free communications system, the grant-free communications system including at least two grant-free resource areas, each grant-free resource area includes at least one cell, each cell in the grant-free resource area shares user equipment information, and configuration information of a grant-free resource of each cell in the grant-free resource area is the same, wherein the grant-free resource in a cell is divided into contention transmission units, CTUs, of different sizes, and for each user equipment in an inactive or connected state and supporting grant-free transmission in the cell, configuration information of a grant-free resource of the user equipment is mapped to one or more CTUs in the grant-free resource of the cell, the method comprising:
when user equipment moves from a first cell to a second cell, obtaining (402), by the user equipment, an ID that is of a second grant-free resource area to which the second cell belongs and is broadcast by a second network device; and
if the ID of the second grant-free resource area is the same as a preobtained ID of a first grant-free resource area to which the first cell belongs, performing (408), by the user equipment, UE, grant-free communication based on a first UE ID corresponding to the first cell;
wherein the performing (408), by the user equipment, grant-free communication based on a first UE ID corresponding to the first cell comprises:
performing, by the user equipment, grant-free communication based on the first UE ID corresponding to the first cell and configuration information of a first target grant-free resource in the first cell, the first target grant-free resource corresponding to the first cell and allocated by a first network device.

2. The method according to claim 1, wherein the method further comprises:
obtaining, by the user equipment, configuration information that is of a second target grant-free resource in the second cell and is sent by the second network device; and
the performing, by the user equipment, grant-free communication based on a first UE ID corresponding to the first cell comprises:
performing, by the user equipment, grant-free communication based on the first UE ID corresponding to the first cell and the configuration information of the second target grant-free resource in the second cell.

3. The method according to any one of claims 1 or 2, wherein the method further comprises:
if the ID of the second grant-free resource area is different from the preobtained ID of the first grant-free resource area to which the first cell belongs, updating, by the user equipment, the ID of the first grant-free resource area to the ID of the second grant-free resource area;
sending (406), by the user equipment, a resource reconfiguration request to the second network device; and
obtaining (407), by the user equipment, configuration information that is of a third target grant-free resource and is sent by the second network device.

4. The method according to any one of claims 1 to 3, further comprising:
after the user equipment completes data transmission, starting, by the user equipment, a timer; and
if the timer expires, releasing, by the user equipment, configuration information of a current grant-free resource, wherein the configuration information of the current grant-free resource is the configuration information of the first target grant-free resource or the configuration information of the second target grant-free resource; or
if the timer does not expire, and if the user equipment currently performs data transmission with the second network device, stopping, by the user equipment, the timer.

5. The method according to claim 3, wherein the obtaining (407), by the user equipment, configuration information that is of a third target grant-free resource and is sent by the second network device comprises:
obtaining, by the user equipment, a radio resource control RRC connection setup complete message sent by the second network device, wherein the radio resource control RRC connection setup complete message carries the configuration information of the third target grant-free resource; or
obtaining, by the user equipment, a random access response sent by the second network device, wherein the random access response carries the configuration information of the third target grant-free resource.

6. A grant-free resource allocation method, wherein the method is applied to a grant-free communications system, the grant-free communications system including at least two grant-free resource areas, each grant-free resource area includes at least one cell, each cell in the grant-free resource area shares user equipment information, and configuration information of a grant-free resource of each cell in a cell identity list is the same, wherein the grant-free resource in a cell is divided into contention transmission units, CTUs, of different sizes, and for each user equipment in an inactive or connected state and supporting grant-free transmission in the cell, configuration information of a first target grant-free resource of the user equipment is mapped to one or more CTUs in the grant-free resource of the cell, the method comprising:
when user equipment moves from a first cell to a second cell, obtaining (1102), by the user equipment, an identity of the second cell; and
if the identity is in a cell identity list preobtained by the user equipment, performing (1107), by the user equipment, grant-free communication based on a first UE ID corresponding to the first cell, wherein each cell in the cell identity list belongs to a same grant-free resource area; or
if the identity is not in a cell identity list preobtained by the user equipment, sending (1105), by the user equipment, a resource reconfiguration request to a second network device, receiving (1106) configuration information that is of a third target grant-free resource and is sent by the second network device, and performing (1107), by the user equipment, grant-free communication based on the configuration information of the third target grant-free resource;
wherein the performing (1107), by the user equipment, grant-free communication based on a first UE ID corresponding to the first cell comprises:
performing, by the user equipment, grant-free communication based on the first UE ID corresponding to the first cell and configuration information of a first target grant-free resource in the first cell, the first target grant-free resource corresponding to the first cell and allocated by a first network device.

7. The method according to claim 6, wherein the method further comprises:
obtaining, by the user equipment, configuration information that is of a second target grant-free resource in the second cell and is sent by the second network device; and
the performing, by the user equipment, grant-free communication based on a first UE ID corresponding to the first cell comprises:
if the configuration information of the second target grant-free resource is different from the configuration information of the first target grant-free resource, performing, by the user equipment, grant-free communication based on the first UE ID corresponding to the first cell and the configuration information of the second target grant-free resource.

8. The method according to any one of claims 6 or 7, wherein the method further comprises:
receiving, by the user equipment, an updated cell identity list sent by the second network device.

9. The method according to any one of claims 6 to 8, further comprising:
after the user equipment completes data transmission, starting, by the user equipment, a timer; and
if the timer expires, releasing, by the user equipment, configuration information of a current grant-free resource, wherein the configuration information of the current grant-free resource is the configuration information of the first target grant-free resource or the configuration information of the second target grant-free resource; or
if the timer does not expire, and if the user equipment currently performs data transmission with the second network device, stopping, by the user equipment, the timer.

10. The method according to any one of claims 6 to 9, wherein the receiving (1106) configuration information that is of a third target grant-free resource and is sent by the second network device comprises:
obtaining, by the user equipment, a radio resource control RRC connection setup complete message sent by the second network device, wherein the radio resource control RRC connection setup complete message carries the configuration information of the third target grant-free resource; or
obtaining, by the user equipment, a random access response sent by the second network device, wherein the random access response carries the configuration information of the third target grant-free resource.

11. A computer program product comprising an instruction, wherein when the computer program product runs on a computer, the computer performs the method according to any one of claims 1 to 10.

12. A communication device, comprising:
a memory, configured to store instructions; and
a processor, configured to cause the method according to any one of claims 1-10 being performed when executing the instructions.

13. A computer-readable storage medium, configured to store programs, wherein when the programs are executed by a communication device, the method according to any one of claims 1-10 is performed.

## Patentansprüche

1. Verfahren zur Zuweisung von genehmigungsfreien Ressourcen, wobei das Verfahren auf ein genehmigungsfreies Kommunikationssystem angewandt wird, wobei das genehmigungsfreie Kommunikationssystem zumindest zwei genehmigungsfreie Ressourcenbereiche beinhaltet, wobei jeder genehmigungsfreie Ressourcenbereich zumindest eine Zelle beinhaltet, wobei jede Zelle in dem genehmigungsfreien Ressourcenbereich Benutzerausrüstungsinformationen teilt, und wobei Konfigurationsinformationen einer genehmigungsfreien Ressource jeder Zelle in dem genehmigungsfreien Ressourcenbereich die gleichen sind, wobei die genehmigungsfreie Ressource in einer Zelle in Konkurrenzübertragungseinheiten, CTUs, unterschiedlicher Größe geteilt ist, und wobei für jede Benutzerausrüstung in einem inaktiven oder verbundenen Zustand und die genehmigungsfreie Übertragung in der Zelle unterstützt, Konfigurationsinformationen einer genehmigungsfreien Ressource der Benutzerausrüstung einer oder mehreren CTUs in der genehmigungsfreien Ressource der Zelle zugewiesen werden, wobei das Verfahren Folgendes umfasst:
wenn sich Benutzerausrüstung von einer ersten Zelle zu einer zweiten Zelle bewegt, Erhalten (402), durch die Benutzerausrüstung, einer ID, die von einem zweiten genehmigungsfreien Ressourcenbereich ist, zu dem die zweite Zelle gehört, und durch eine zweite Netzwerkvorrichtung übertragen wird; und
wenn die ID des zweiten genehmigungsfreien Ressourcenbereichs die gleiche wie eine vorab erhaltene ID eines ersten genehmigungsfreien Ressourcenbereichs ist, zu dem die erste Zelle gehört, Durchführen (408), durch die Benutzerausrüstung, UE, von genehmigungsfreier Kommunikation basierend auf einer ersten UE-ID, die der ersten Zelle entspricht;
wobei das Durchführen (408), durch die Benutzerausrüstung, von genehmigungsfreier Kommunikation basierend auf einer ersten UE-ID, die der ersten Zelle entspricht, Folgendes umfasst:
Durchführen, durch die Benutzerausrüstung, von genehmigungsfreier Kommunikation basierend auf der ersten UE-ID, die der ersten Zelle entspricht, und Konfigurationsinformationen einer ersten genehmigungsfreien Zielressource in der ersten Zelle, wobei die erste genehmigungsfreie Zielressource der ersten Zelle entspricht und durch eine erste Netzwerkvorrichtung zugewiesen wird.

2. Verfahren nach Anspruch 1, wobei das Verfahren ferner Folgendes umfasst:
Erhalten, durch die Benutzerausrüstung, von Konfigurationsinformationen, die von einer zweiten genehmigungsfreien Zielressource in der zweiten Zelle sind und durch die zweite Netzwerkvorrichtung gesendet werden; und
das Durchführen, durch die Benutzerausrüstung, von genehmigungsfreier Kommunikation basierend auf einer ersten UE-ID, die der ersten Zelle entspricht, Folgendes umfasst:
Durchführen, durch die Benutzerausrüstung, von genehmigungsfreier Kommunikation basierend auf der ersten UE-ID, die der ersten Zelle entspricht, und den Konfigurationsinformationen der zweiten genehmigungsfreien Zielressource in der zweiten Zelle.

3. Verfahren nach einem der Ansprüche 1 oder 2, wobei das Verfahren ferner Folgendes umfasst:
wenn sich die ID des zweiten genehmigungsfreien Ressourcenbereichs von der vorab erhaltenen ID des ersten genehmigungsfreien Ressourcenbereichs, zu dem die erste Zelle gehört, unterscheidet, Aktualisieren, durch die Benutzerausrüstung, der ID des ersten genehmigungsfreien Ressourcenbereichs auf die ID des zweiten genehmigungsfreien Ressourcenbereichs;
Senden (406), durch die Benutzerausrüstung, einer Ressourcenrekonfigurationsanforderung an die zweite Netzwerkvorrichtung; und
Erhalten (407), durch die Benutzerausrüstung, von Konfigurationsinformationen, die von einer dritten genehmigungsfreien Zielressource sind und durch die zweite Netzwerkvorrichtung gesendet werden.

4. Verfahren nach einem der Ansprüche 1 bis 3, ferner umfassend:
nachdem die Benutzerausrüstung Datenübertragung beendet, Starten, durch die Benutzerausrüstung, eines Timers; und
wenn der Timer abläuft, Freigeben, durch die Benutzerausrüstung, von Konfigurationsinformationen einer aktuellen genehmigungsfreien Ressource, wobei die Konfigurationsinformationen der aktuellen genehmigungsfreien Ressource die Konfigurationsinformationen der ersten genehmigungsfreien Zielressource oder die Konfigurationsinformationen der zweiten genehmigungsfreien Zielressource sind; oder
wenn der Timer nicht abläuft und wenn die Benutzerausrüstung aktuell Datenübertragung mit der zweiten Netzwerkvorrichtung durchführt, Anhalten, durch die Benutzerausrüstung, des Timers.

5. Verfahren nach Anspruch 3, wobei das Erhalten (407), durch die Benutzerausrüstung, von Konfigurationsinformationen, die von einer dritten genehmigungsfreien Zielressource sind und durch die zweite Netzwerkvorrichtung gesendet werden, Folgendes umfasst:
Erhalten, durch die Benutzerausrüstung, einer Funkressourcensteuer-RRC-Verbindungsaufbau-Abschlussnachricht, die durch die zweite Netzwerkvorrichtung gesendet wird, wobei die Funkressourcensteuer-RRC-Verbindungsaufbau-Abschlussnachricht die Konfigurationsinformationen der dritten genehmigungsfreien Zielressource trägt; oder
Erhalten, durch die Benutzerausrüstung, einer Direktzugriffsantwort, die durch die zweite Netzwerkvorrichtung gesendet wird, wobei die Direktzugriffsantwort die Konfigurationsinformationen der dritten genehmigungsfreien Zielressource trägt.

6. Verfahren zur Zuweisung von genehmigungsfreien Ressourcen, wobei das Verfahren auf ein genehmigungsfreies Kommunikationssystem angewandt wird, wobei das genehmigungsfreie Kommunikationssystem zumindest zwei genehmigungsfreie Ressourcenbereiche beinhaltet, wobei jeder genehmigungsfreie Ressourcenbereich zumindest eine Zelle beinhaltet, wobei jede Zelle in dem genehmigungsfreien Ressourcenbereich Benutzerausrüstungsinformationen teilt, und wobei Konfigurationsinformationen einer genehmigungsfreien Ressource jeder Zelle in einer Zellenidentitätsliste die gleichen sind, wobei die genehmigungsfreie Ressource in einer Zelle in Konkurrenzübertragungseinheiten, CTUs, unterschiedlicher Größe geteilt ist, und wobei für jede Benutzerausrüstung in einem inaktiven oder verbundenen Zustand und die genehmigungsfreie Übertragung in der Zelle unterstützt, Konfigurationsinformationen einer ersten genehmigungsfreien Zielressource der Benutzerausrüstung einer oder mehreren CTUs in der genehmigungsfreien Ressource der Zelle zugeordnet werden, wobei das Verfahren Folgendes umfasst:
wenn sich Benutzerausrüstung von einer ersten Zelle zu einer zweiten Zelle bewegt, Erhalten (1102), durch die Benutzerausrüstung, einer Identität der zweiten Zelle; und
wenn die Identität in einer Zellenidentitätsliste ist, die vorab durch die Benutzerausrüstung erhalten wird, Durchführen (1107), durch die Benutzerausrüstung, von genehmigungsfreier Kommunikation basierend auf einer ersten UE-ID, die der ersten Zelle entspricht, wobei jede Zelle in der Zellenidentitätsliste zu einem gleichen genehmigungsfreien Ressourcenbereich gehört; oder
wenn die Identität nicht in einer Zellenidentitätsliste ist, die vorab durch die Benutzerausrüstung erhalten wird, Senden (1105), durch die Benutzerausrüstung, einer Ressourcenrekonfigurationsanforderung an eine zweite Netzwerkvorrichtung, Empfangen (1106) von Konfigurationsinformationen, die von einer dritten genehmigungsfreien Zielressource sind und durch die zweite Netzwerkvorrichtung gesendet werden, und Durchführen (1107), durch die Benutzerausrüstung, von genehmigungsfreier Kommunikation basierend auf den Konfigurationsinformationen der dritten genehmigungsfreien Zielressource;
wobei das Durchführen (1107), durch die Benutzerausrüstung, von genehmigungsfreier Kommunikation basierend auf einer ersten UE-ID, die der ersten Zelle entspricht, Folgendes umfasst:
Durchführen, durch die Benutzerausrüstung, von genehmigungsfreier Kommunikation basierend auf der ersten UE-ID, die der ersten Zelle entspricht, und Konfigurationsinformationen einer ersten genehmigungsfreien Zielressource in der ersten Zelle, wobei die erste genehmigungsfreie Zielressource der ersten Zelle entspricht und durch eine erste Netzwerkvorrichtung zugewiesen wird.

7. Verfahren nach Anspruch 6, wobei das Verfahren ferner Folgendes umfasst:
Erhalten, durch die Benutzerausrüstung, von Konfigurationsinformationen, die von einer zweiten genehmigungsfreien Zielressource in der zweiten Zelle sind und durch die zweite Netzwerkvorrichtung gesendet werden; und
das Durchführen, durch die Benutzerausrüstung, von genehmigungsfreier Kommunikation basierend auf einer ersten UE-ID, die der ersten Zelle entspricht, Folgendes umfasst:
wenn sich die Konfigurationsinformationen der zweiten genehmigungsfreien Zielressource von den Konfigurationsinformationen der ersten genehmigungsfreien Zielressource unterscheiden, Durchführen, durch die Benutzerausrüstung, von genehmigungsfreier Kommunikation basierend auf der ersten UE-ID, die der ersten Zelle entspricht, und den Konfigurationsinformationen der zweiten genehmigungsfreien Zielressource.

8. Verfahren nach einem der Ansprüche 6 oder 7, wobei das Verfahren ferner Folgendes umfasst:
Empfangen, durch die Benutzerausrüstung, einer aktualisierten Zellenidentitätsliste, die durch die zweite Netzwerkvorrichtung gesendet wird.

9. Verfahren nach einem der Ansprüche 6 bis 8, ferner umfassend:
nachdem die Benutzerausrüstung Datenübertragung beendet, Starten, durch die Benutzerausrüstung, eines Timers; und
wenn der Timer abläuft, Freigeben, durch die Benutzerausrüstung, von Konfigurationsinformationen einer aktuellen genehmigungsfreien Ressource, wobei die Konfigurationsinformationen der aktuellen genehmigungsfreien Ressource die Konfigurationsinformationen der ersten genehmigungsfreien Zielressource oder die Konfigurationsinformationen der zweiten genehmigungsfreien Zielressource sind; oder
wenn der Timer nicht abläuft und wenn die Benutzerausrüstung aktuell Datenübertragung mit der zweiten Netzwerkvorrichtung durchführt, Anhalten, durch die Benutzerausrüstung, des Timers.

10. Verfahren nach einem der Ansprüche 6 bis 9, wobei das Empfangen (1106) von Konfigurationsinformationen, die von einer dritten genehmigungsfreien Zielressource sind und durch die zweite Netzwerkvorrichtung gesendet werden, Folgendes umfasst:
Erhalten, durch die Benutzerausrüstung, einer Funkressourcensteuer-RRC-Verbindungsaufbau-Abschlussnachricht, die durch die zweite Netzwerkvorrichtung gesendet wird, wobei die Funkressourcensteuer-RRC-Verbindungsaufbau-Abschlussnachricht die Konfigurationsinformationen der dritten genehmigungsfreien Zielressource trägt; oder
Erhalten, durch die Benutzerausrüstung, einer Direktzugriffsantwort, die durch die zweite Netzwerkvorrichtung gesendet wird, wobei die Direktzugriffsantwort die Konfigurationsinformationen der dritten genehmigungsfreien Zielressource trägt.

11. Computerprogrammprodukt, umfassend eine Anweisung, wobei, wenn das Computerprogrammprodukt auf einem Computer läuft, der Computer das Verfahren nach einem Ansprüche 1 bis 10 durchführt.

12. Kommunikationsvorrichtung, umfassend:
einen Speicher, der konfiguriert ist, um Anweisungen zu speichern; und
einen Prozessor, der konfiguriert ist, um zu bewirken, dass das Verfahren nach einem der Ansprüche 1-10 durchgeführt wird, wenn die Anweisungen ausgeführt werden.

13. Computerlesbares Speichermedium, das konfiguriert ist, um Programme zu speichern, wobei, wenn die Programme durch eine Kommunikationsvorrichtung ausgeführt werden, das Verfahren nach einem der Ansprüche 1-10 durchgeführt wird.

## Revendications

1. Procédé d'attribution de ressources sans octroi, dans lequel le procédé est appliqué à un système de communication sans octroi, le système de communication sans octroi comportant au moins deux zones de ressources sans octroi, chaque zone de ressource sans octroi comporte au moins une cellule, chaque cellule dans la zone de ressources sans octroi partage des informations d'équipement d'utilisateur, et les informations de configuration d'une ressource sans octroi de chaque cellule dans la zone de ressources sans octroi sont identiques, dans lequel la ressource sans octroi dans une cellule est divisée en unités de transmission de conflit, CTU, de différentes tailles, et pour chaque équipement d'utilisateur dans un état inactif ou connecté et prenant en charge la transmission sans octroi dans la cellule, les informations de configuration d'une ressource sans octroi de l'équipement d'utilisateur sont mappées sur une ou plusieurs CTU dans la ressource sans octroi de la cellule, le procédé comprenant :
lorsque l'équipement d'utilisateur passe d'une première cellule à une seconde cellule, l'obtention (402), par l'équipement d'utilisateur, d'un identifiant qui est d'une seconde zone de ressources sans octroi à laquelle appartient la seconde cellule et qui est diffusé par un second dispositif de réseau ; et
si l'identifiant de la seconde zone de ressources sans octroi est le même qu'un identifiant obtenu au préalable d'une première zone de ressources sans octroi à laquelle appartient la première cellule, l'exécution (408), par l'équipement d'utilisateur, UE, d'une communication sans octroi basée sur un premier identifiant d'UE correspondant à la première cellule ;
dans lequel l'exécution (408), par l'équipement d'utilisateur, d'une communication sans octroi sur la base d'un premier identifiant d'UE correspondant à la première cellule comprend :
l'exécution, par l'équipement d'utilisateur, d'une communication sans octroi sur la base du premier identifiant d'UE correspondant à la première cellule et des informations de configuration d'une première ressource cible sans octroi dans la première cellule, la première ressource cible sans octroi correspondant à la première cellule et étant attribuée par un premier dispositif de réseau.

2. Procédé selon la revendication 1, dans lequel le procédé comprend en outre :
l'obtention, par l'équipement d'utilisateur, des informations de configuration qui sont d'une deuxième ressource cible sans octroi dans la seconde cellule et qui sont envoyées par le second dispositif de réseau ; et
l'exécution, par l'équipement d'utilisateur, d'une communication sans octroi sur la base d'un premier identifiant d'UE correspondant à la première cellule comprend :
l'exécution, par l'équipement d'utilisateur, d'une communication sans octroi sur la base du premier identifiant d'UE correspondant à la première cellule et des informations de configuration de la deuxième ressource cible sans octroi dans la seconde cellule.

3. Procédé selon l'une quelconque des revendications 1 ou 2, dans lequel le procédé comprend en outre :
si l'identifiant de la seconde zone de ressources sans octroi est différent de l'identifiant obtenu au préalable de la première zone de ressources sans octroi à laquelle appartient la première cellule, la mise à jour, par l'équipement d'utilisateur, de l'identifiant de la première zone de ressources sans octroi vers l'identifiant de la seconde zone de ressources sans octroi ;
l'envoi (406), par l'équipement d'utilisateur, d'une demande de reconfiguration de ressource au second dispositif de réseau ; et
l'obtention (407), par l'équipement d'utilisateur, des informations de configuration qui sont d'une troisième ressource cible sans octroi et qui sont envoyées par le second dispositif de réseau.

4. Procédé selon l'une quelconque des revendications 1 à 3, comprenant en outre :
après que l'équipement d'utilisateur a terminé la transmission de données, le démarrage, par l'équipement d'utilisateur, d'un temporisateur ; et
si le temporisateur expire, l'émission, par l'équipement d'utilisateur, d'informations de configuration d'une ressource actuelle sans octroi, dans lequel les informations de configuration de la ressource actuelle sans octroi sont les informations de configuration de la première ressource cible sans octroi ou les informations de configuration de la deuxième ressource cible sans octroi ; ou
si le temporisateur n'expire pas, et si l'équipement d'utilisateur effectue actuellement une transmission de données avec le second dispositif de réseau, l'arrêt, par l'équipement d'utilisateur, du temporisateur.

5. Procédé selon la revendication 3, dans lequel l'obtention (407), par l'équipement d'utilisateur, des informations de configuration qui sont d'une troisième ressource cible sans octroi et qui sont envoyées par le second dispositif de réseau comprend :
l'obtention, par l'équipement d'utilisateur, d'un message d'établissement réussi de connexion RRC de commande de ressources radio envoyé par le second dispositif de réseau, dans lequel le message d'établissement réussi de connexion RRC de commande de ressource radio transporte les informations de configuration de la troisième ressource cible sans octroi ; ou
l'obtention, par l'équipement d'utilisateur, d'une réponse d'accès aléatoire envoyée par le second dispositif de réseau, dans lequel la réponse d'accès aléatoire transporte les informations de configuration de la troisième ressource cible sans octroi.

6. Procédé d'attribution de ressources sans octroi, dans lequel le procédé est appliqué à un système de communication sans octroi, le système de communication sans octroi comportant au moins deux zones de ressources sans octroi, chaque zone de ressource sans octroi comporte au moins une cellule, chaque cellule dans la zone de ressources sans octroi partage des informations d'équipement d'utilisateur, et les informations de configuration d'une ressource sans octroi de chaque cellule dans la liste d'identités de cellules sont identiques, dans lequel la ressource sans octroi dans une cellule est divisée en unités de transmission de conflit, CTU, de différentes tailles, et pour chaque équipement d'utilisateur dans un état inactif ou connecté et prenant en charge la transmission sans octroi dans la cellule, les informations de configuration d'une première ressource cible sans octroi de l'équipement d'utilisateur sont mappées sur une ou plusieurs CTU dans la ressource sans octroi de la cellule, le procédé comprenant :
lorsque l'équipement d'utilisateur passe d'une première cellule à une seconde cellule, l'obtention (1102), par l'équipement d'utilisateur, d'une identité de la seconde cellule ; et
si l'identité se trouve dans une liste d'identités de cellules obtenue au préalable par l'équipement d'utilisateur, l'exécution (1107), par l'équipement d'utilisateur, d'une communication sans octroi sur la base d'un premier identifiant d'UE correspondant à la première cellule, dans lequel chaque cellule de la liste d'identités de cellules appartient à une même zone de ressources sans octroi ; ou
si l'identité n'est pas dans une liste d'identités de cellules obtenue au préalable par l'équipement d'utilisateur, l'envoi (1105), par l'équipement d'utilisateur, d'une demande de reconfiguration de ressource à un second dispositif de réseau, la réception (1106) d'informations de configuration qui sont d'une troisième ressource cible sans octroi et sont envoyées par le second dispositif de réseau, et l'exécution (1107), par l'équipement d'utilisateur, d'une communication sans octroi sur la base des informations de configuration de la troisième ressource cible sans octroi ;
dans lequel l'exécution (1107), par l'équipement d'utilisateur, d'une communication sans octroi sur la base d'un premier identifiant d'UE correspondant à la première cellule comprend :
l'exécution, par l'équipement d'utilisateur, d'une communication sans octroi sur la base du premier identifiant d'UE correspondant à la première cellule et des informations de configuration d'une première ressource cible sans octroi dans la première cellule, la première ressource cible sans octroi correspondant à la première cellule et étant attribuée par un premier dispositif de réseau.

7. Procédé selon la revendication 6, dans lequel le procédé comprend en outre :
l'obtention, par l'équipement d'utilisateur, des informations de configuration qui sont d'une deuxième ressource cible sans octroi dans la seconde cellule et qui sont envoyées par le second dispositif de réseau ; et
l'exécution, par l'équipement d'utilisateur, d'une communication sans octroi sur la base d'un premier identifiant d'UE correspondant à la première cellule comprend :
si les informations de configuration de la deuxième ressource cible sans octroi sont différentes des informations de configuration de la première ressource cible sans octroi, l'exécution, par l'équipement d'utilisateur, d'une communication sans octroi sur la base du premier identifiant d'UE correspondant à la première cellule et des informations de configuration de la deuxième ressource cible sans octroi.

8. Procédé selon l'une quelconque des revendications 6 ou 7, dans lequel le procédé comprend en outre :
la réception, par l'équipement d'utilisateur, d'une liste d'identités de cellules mise à jour envoyée par le second dispositif de réseau.

9. Procédé selon l'une quelconque des revendications 6 à 8, comprenant en outre :
après que l'équipement d'utilisateur a terminé la transmission de données, le démarrage, par l'équipement d'utilisateur, d'un temporisateur ; et
si le temporisateur expire, l'émission, par l'équipement d'utilisateur, d'informations de configuration d'une ressource actuelle sans octroi, dans lequel les informations de configuration de la ressource actuelle sans octroi sont les informations de configuration de la première ressource cible sans octroi ou les informations de configuration de la deuxième ressource cible sans octroi ; ou
si le temporisateur n'expire pas, et si l'équipement d'utilisateur effectue actuellement une transmission de données avec le second dispositif de réseau, l'arrêt, par l'équipement d'utilisateur, du temporisateur.

10. Procédé selon l'une quelconque des revendications 6 à 9, dans lequel la réception (1106) des informations de configuration qui sont d'une troisième ressource cible sans octroi et qui sont envoyées par le second dispositif de réseau comprend :
l'obtention, par l'équipement d'utilisateur, d'un message d'établissement réussi de connexion RRC de commande de ressources radio envoyé par le second dispositif de réseau, dans lequel le message d'établissement réussi de connexion RRC de commande de ressource radio transporte les informations de configuration de la troisième ressource cible sans octroi ; ou
l'obtention, par l'équipement d'utilisateur, d'une réponse d'accès aléatoire envoyée par le second dispositif de réseau, dans lequel la réponse d'accès aléatoire transporte les informations de configuration de la troisième ressource cible sans octroi.

11. Produit de programme informatique comprenant une instruction, dans lequel, lorsque le produit de programme informatique est exécuté sur un ordinateur, l'ordinateur exécute le procédé selon l'une quelconque des revendications 1 à 10.

12. Dispositif de communication, comprenant :
une mémoire, configurée pour stocker des instructions ; et
un processeur, configuré pour provoquer la mise en œuvre du procédé selon l'une quelconque des revendications 1 à 10 lors de l'exécution des instructions.

13. Support de stockage lisible par ordinateur, configuré pour stocker des programmes, dans lequel lorsque les programmes sont exécutés par un dispositif de communication, le procédé selon l'une quelconque des revendications 1 à 10 est mis en œuvre.
